(19) Europäisches Patentamt
European Patent Office
Office européen des brevets

(11) **EP 3 673 714 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **18778838.5**

(22) Anmeldetag: **17.09.2018**

(51) Internationale Patentklassifikation (IPC):
**H05B 45/375** (2020.01)    **H02M 3/156** (2006.01)

(52) Gemeinsame Patentklassifikation (CPC):
**H05B 45/375;** H02M 1/0058; H02M 3/156;
Y02B 70/10

(86) Internationale Anmeldenummer:
**PCT/EP2018/075050**

(87) Internationale Veröffentlichungsnummer:
**WO 2019/063333 (04.04.2019 Gazette 2019/14)**

(54) **LAMPENBETRIEBSGERÄT MIT KONVERTER IN DCM**

LAMP OPERATING DEVICE WITH CONVERTER IN DCM

DISPOSITIF DE COMMANDE DE LAMPE AYANT UN CONVERTISSEUR EN DCM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2017 AT 21817 U**
**04.12.2017 DE 102017221786**
**28.08.2018 DE 202018104924 U**

(43) Veröffentlichungstag der Anmeldung:
**01.07.2020 Patentblatt 2020/27**

(73) Patentinhaber: **Tridonic GmbH & Co. KG**
**6851 Dornbirn (AT)**

(72) Erfinder:
• **DE CLERCQ, Ludwig Erasmus**
**6850 Dornbirn (AT)**
• **NETZER, Harald**
**6710 Nenzing (AT)**
• **LOCHMANN, Frank**
**88147 Achberg (DE)**
• **KUCERA, Clemens**
**6700 Bludenz (AT)**

(74) Vertreter: **Beder, Jens**
**Mitscherlich PartmbB**
**Patent- und Rechtsanwälte**
**Karlstraße 7**
**80333 München (DE)**

(56) Entgegenhaltungen:
DE-A1- 102014 220 099    DE-A1- 102015 203 249
DE-A1- 102015 210 710    US-A1- 2015 244 272
US-A1- 2015 303 796    US-B1- 8 552 893

**Beschreibung**

Die vorliegende Erfindung betrifft ein Lampenbetriebsgerät, das insbesondere zum dimmbaren Betrieb von Leuchtmitteln, wie beispielsweise LEDs, ausgelegt ist. Unter LEDs sind selbstverständlich auch organische LEDs (OLEDs) zu verstehen.

Die Erfindung betrifft genauer gesagt dimmbare Betriebsgeräte für Leuchtmittel, die einen aktiv getakteten Konverter verwenden. Dabei steuert eine Steuerschaltung einen Schalter des getakteten Konverters an, derart, dass im eingeschalteten (leitfähigen) Zustand des Schalters ein Energiespeicherelement (beispielsweise eine Induktivität) aufgeladen wird, welches Energiespeicherelement sich im ausgeschalteten Zustand des Schalters (nicht leitfähiger Zustand des Schalters) wieder über die Leuchtmittelstrecke entlädt oder bevorzugt einen weiteren Energiespeicher (bspw. Kondensator) lädt, der wiederum die LED-Strecke mit einer ggf. mit Rippel behafteten DC-Spannung speist. Somit kommt es letztendlich zu einem ansteigenden und abfallenden Stromverlauf durch das Energiespeicherelement (Induktivität).

Wenn eine relativ hohe mittlere Lichtleistung gewünscht ist, wird natürlich das Abfallen des Stroms durch die Induktivität auf einen Wert grösser als Null begrenzt, und der Schalter wird wieder leitfähig geschaltet, bevor der Strom durch die Induktivität auf Null abgesunken ist. Wenn indessen beispielsweise für ein Dimmen die Lichtleistung verringert werden soll, wird die Wiedereinschaltschwelle (oder der entsprechende zeitliche Wiedereinschaltzeitpunkt) dementsprechend verringert (bzw. der Wiedereinschaltzeitpunkt verlängert), bis schließlich der Zustand erreicht wird, dass der Strom durch die Induktivität tatsächlich bis auf Null abfallen darf, bevor der Schalter wieder leitfähig geschaltet wird und der Strom somit wieder ansteigt.

Diese Betriebsart (Wiedereinschalten bei Erreichen des Null-Pegels) wird typischerweise "kritischer Modus" (engl. critical mode oder borderline mode, abgekürzt BCM, auch: Grenzbetriebsmodus) bezeichnet.

Wenn nunmehr ausgehend von diesem kritischen Modus die Lichtleistung weiter verringert werden soll, muss natürlich eine Totzeit eingeführt werden zwischen dem Abfallen des Stroms durch die Induktivität auf Null, und dem Wiedereinschalten des Schalters. Diese Betriebsart wird dementsprechend "Modus mit lückendem Strom" bezeichnet (engl. discontinuous mode, DCM, auch: lückender Betriebsmodus, lückender Modus).

Es ist indessen vorteilhaft, das Wiedereinschalten im Modus mit lückendem Strom nicht zu beliebigen Zeitpunkten auszuführen, sondern nur dann, wenn der nach dem ersten Nulldurchgang (aufgrund von Resonanzeffekten) nachschwingende und somit mehrfach die Null-Linie kreuzende Strom durch die Induktivität einen ansteigenden Nulldurchgang durchführt. Nur bei Wiedereinschalten des Schalters in diesen zeitlichen Bereichen des positivem Nulldurchgangs des Stroms durch die Induktivität kann ein spannungsloses Schalten des Schalters ("zero voltage switching", ZVS) erzielt werden.

Ein positiver Nulldurchgang des Stroms durch die Induktivität ist ein Strom, der zu einem Zeitpunkt, zu dem der Strom den Wert Null aufweist, zugleich einen positiven Gradienten zeigt, also eine erste Ableitung des Verlaufs des Stroms zum Zeitpunkt des Nulldurchgangs größer als Null (positiv) ist.

Die zeitlichen Bereiche der positiven Nulldurchgänge können durch Messung (bspw. des Stroms durch die Induktivität) erfasst sein, oder aufgrund der durch die Dimensionierung der Bauteile bekannten Resonanzfrequenz vorausberechnet werden.

Somit ergibt sich also das Problem, dass im lückenden Betrieb bzw. beim Übergang vom kritischen Modus in den lückenden Betrieb die Leuchtmittelleistung nicht mehr durch kontinuierliche Veränderung des Wiedereinschaltzeitpunktes stetig verändert werden kann, sondern nur in Inkrementen ("valley switching-Betrieb") zwischen einem oder mehreren positiven Nulldurchgängen des Stroms durch die Induktivität, was zu Sprüngen in der Lichtleistung führen kann, die auch optisch als Flackern während einer Dimmrampe wahrgenommen werden können.

Die Erfindung setzt an diesem Problem an und stellt eine Technik bereit, die bei einem Dimmen im lückenden Betrieb bzw. beim Übergang vom kritischen Modus in den lückenden Betrieb das Problem der Sprünge der Ausgangsleistung des Konverters zumindest verringert, auch wenn das Wiedereinschalten nur zu den Zeitpunkten der positiven Nulldurchgängen des Stroms durch die Induktivität erfolgt. Ein wiederholtes Springen des Konverters zwischen zwei Arbeitspunkten, wobei die zwei Arbeitspunkte durch die jeweiligen diskret beabstandeten Wiedereinschaltzeitpunkte des Schalters gekennzeichnet sind, in einem stationären Betrieb (engl.: steady state) des Konverters ist zu verhindern.

Als weiterer Aspekt soll dabei die Ausgestaltung derart sein, dass nicht unbedingt ein ASIC als Steuereinrichtung benötigt wird, sondern dass auch ein Mikrokontroller die entsprechende Ansteuerung des Schalters veranlassen kann.

DE 10 2014 220099 A1 betrifft einen getakteten elektronischen Energiewandler mit einem elektronischen Schaltelement, wenigstens zwei elektrischen Energiespeicher, einem Anschluss zum Anschließen einer elektrischen Energiequelle, einem Anschluss zum Anschließen einer elektrischen Energiesenke, einem Taktgeber zum Ansteuern und Betreiben des elektronischen Schaltelements im Schaltbetrieb sowie einer Einstelleinheit, welche dazu ausgelegt ist, ein erstes Signal zur Einstellung einer zu übertragenden Leistung des Energiewandlers bereitzustellen. Dabei ist der Taktgeber dazu ausgelegt, die zu übertragende Leistung des Energiewandlers in einem ersten Leistungsbereich mittels der Einschaltzeit ton des elektronischen Schaltelements einzustellen, sowie in einem zweiten Leistungsbereich, in dem die zu übertragende Leistung des Energiewandlers kleiner ist als in dem ersten Leistungsbereich, die zu übertragende Leistung des Energiewandlers in dem zweiten Leistungsbereich mittels einer Kombination der Einschaltzeit ton und einer Ergänzungsausschaltzeit toff_add einzustellen, wobei die Ergänzungsausschaltzeit toff_add konstant ist.

US 2015/244272 A1 offenbart Treiberschaltungen in einem quasiresonanten Betriebsmodus, um die Zeit, wenn ein Schalter eingeschaltet wird, von der Zeit eines Spannungstals zu der Zeit eines anderen Spannungstals einzustellen, um einen durchschnittlichen Laststrom oder eine durchschnittliche Lastspannung zu steuern. Die Anpassung kann sofort oder allmählich erfolgen. Diese beiden beispielhaften Techniken sorgen für eine hohe Schalteffizienz des Schalters.

DE 10 2015 210710 A1 zeigt eine getaktete Sperrwandlerschaltung zum direkten Betreiben von Leuchtmitteln mit einem Transformator mit einer Primärwicklung, welche mit einem steuerbaren Schalter gekoppelt ist, und einer Sekundärwicklung, an welche die Leuchtmittel ankoppelbar sind, ferner eine Steuereinheit zum Ansteuern des Schalters, und Mittel zum direkten oder indirekten Erfassen des Stroms durch den Schalter im eingeschalteten Zustand und zur Zuführung eines diesen Strom wiedergebenden Signals an die Steuereinheit auf. Die Steuereinheit ist dazu ausgelegt, den Schalter auszuschalten, wenn das den Strom wiedergebende Signal eine veränderbare Abschaltschwelle erreicht hat, die Abschaltschwelle zur Veränderung der durch die Sperrwandlerschaltung übertragenen Leistung zu verändern, und die Abschaltschwelle für das Stromsignal nur bis zu einem Minimalwert zu verringern und zur Erzielung einer weiteren Verringerung der durch die Sperrwandlerschaltung übertragenen Leistung bei fixierter Abschaltschwelle vom Betrieb im Grenzmodus in den diskontinuierlichen Betrieb überzugehen.

US 2015/303796 A1 zeigt eine Steuerung, die dafür ausgelegt ist, ein Steuersignal zum Aktivieren und Deaktivieren eines Schalters eines Schaltleistungswandlers zu erzeugen, um eine Schaltperiode und einen Spitzenstrom des Schaltleistungswandlers zu steuern, um somit einen geregelten Strom des Schaltleistungswandlers auf einem gewünschten Wert zu halten: wenn die Dauer der Schaltperiode unter eine minimale Schaltperiodendauer abfällt, erhöht die Steuerung die Dauer der Schaltperiode um eine Klingelperiode einer Spannung des Schalters und den Spitzenstrom, um die Zunahme der Schaltperiode zu kompensieren, und erhöht den Spitzenstrom über einen maximalen Spitzenstrom um für den Erhöhung der Schaltperiode zu kompensieren um den geregelten Strom aufrechtzuhalten, und wenn der Spitzenstrom über einen maximalen Spitzenstrom ansteigt, verringert die Steuerung die Schaltperiode um eine Klingelperiode der Spannung des Schalters und verringert den Spitzenstrom, um die Verringerung der Schaltperiode zu kompensieren, um den geregelten Strom des Schaltleistungswandlers auf einem gewünschten Wert beizubehalten.

US 8,552,893 B1 offenbart ein Steuersystem, das ein Steuersignal an eine nichtlineare Anlage liefert, die als Reaktion auf das Steuersignal ein Antwortsignal erzeugt. Das Steuersystem umfasst einen Detektor, der einen vorbestimmten Wert einer Anlagengröße erfasst, eine mit dem Detektor gekoppelte Talumschaltlogik, um einen Zustand eines Anlagenschalters zu ändern, wenn die Anlagengröße minimiert ist, und einen damit gekoppelten Impulsbreitenmodulator der Talschaltlogik, um ein Steuersignal zu erzeugen, das den Anlagenschalter steuert. Die Talumschaltlogik enthält einen nichtlinearen Delta-Sigma-Modulator, der einen Fehler in einem Anlagenantwortsignal kompensiert, indem er die Dauer einer Einschaltzeit eines Anlagenschalters anpasst, um zu bewirken, dass ein Mittelwert des Anlagenantwortsignals auf einen Zielsignalwert zu konvergiert.

DE 10 2015 2032049 A1 zeigt einen Abwärtswandler zum Betreiben von Leuchtmitteln mit einer Steuerschaltung. Die Steuerschaltung ist dazu ausgelegt, mittels Ansteuerung des Schalters den Abwärtswandler in einem Grenzbetriebsmodus zu betreiben, wenn die durch das Leuchtmittel gebildete Last so hoch ist, dass die sich ergebende Abschaltschwelle über einem vorgegebenen Mindestwert der Abschaltschwelle liegt, und in einem diskontinuierlichen Betriebsmodus mit dem Mindestwert der Abschaltschwelle zu betreiben, wenn die durch das Leuchtmittel gebildete Last so niedrig ist, dass die sich bei einem Grenzbetriebsmodus ergebende Abschaltschwelle unter dem vorgegebenen Mindestwert der Abschaltschwelle liegen würde. Das den Strom wiedergebenden Signal wird sowohl im Falle des Grenzbetriebsmodus wie auch im Falle des diskontinuierlichen Betriebsmodus der Steuerschaltung zugeführt, ohne extern einer Mittelwertbildung unterzogen zu werden.

Diese Aufgabe wird gelöst durch die Merkmale der unabhängigen Ansprüche. Die abhängigen Ansprüche bilden den zentralen Gedanken der Erfindung in vorteilhafter Weise weiter.

Ein erster Aspekt der Erfindung betrifft nach unabhängigem Anspruch 1 ein Betriebsgerät zum dimmbaren Betrieb von Leuchtmitteln, insbesondere einer oder mehrere LED(s). Es weist eine getaktete Konverterschaltung umfassend ein Energiespeicherelement, insbesondere wenigstens einer Induktivität, eine Steuerschaltung und wenigstens einem Schalter auf, der ausgehend von der Steuerschaltung getaktet ist. Die Konverterschaltung kann bspw. ein Buck- oder ein Boost-Konverter sein.

Die Steuerschaltung ist dazu ausgelegt, durch Ansteuerung des Schalters die Konverterschaltung wahlweise, insbesondere von einem die Leistung vorgebenden Signal wenigstens im kritischen Modus oder im Modus mit lückendem Betrieb zu betreiben. In einem ersten Dimmbereich liegt also ein Betrieb im lückenden Modus vor, und in einem weiteren davon getrennten Dimmbereich ein Betrieb im kritischen Modus. Diese beiden Modi können aneinander angrenzen, es kann indessen zwischen ihnen auch ein Hybridmodus vorgesehen sein, in dem der lückende bzw. der kritische Modus im zeitlichen Multiplex vorliegen. (Optional kann sich an den kritischen Modus auch ein kontinuierlicher Modus anschließen).

Die Steuerschaltung setzt im lückenden Betrieb einen Wiedereinschaltzeitpunkt des Schalters in diskreten Inkrementen in einen der zeitlichen Bereiche nach dem ersten Nulldurchgang, in denen der Strom beim Entladen des Energiespeicherelements einen steigenden Nulldurchgang vollführt. Die Steuerschaltung ist dabei dazu ausgelegt, bei einer inkrementellen Veränderung des Wiedereinschaltzeitpunkts eine die Leuchtmittel-Leistung beeinflussenden Rückführgröße durch direkte oder indirekte Veränderung der Einschaltzeitdauer des Schalters zu regeln.

Die Steuerschaltung ist dafür ausgelegt, in dem lückenden Betrieb eine Veränderung des Wiedereinschaltzeitpunkts zu einem von einem aktuellen Wiedereinschaltzeitpunkt des Schalters verschiedenen berechneten neuen Wiedereinschaltzeitpunkt nur dann auszuführen, wenn der neue Wiedereinschaltzeitpunkt des Schalters von dem aktuellen Wiedereinschaltzeitpunkt um eine Zeitdauer größer als ein vorbestimmter Wert abweicht. Der vorbestimmte Wert ist eine Zeitdauer länger als 55 % und bevorzugt eine Zeitdauer länger 62.5 % der Periodendauer einer Resonanzschwingung des Stroms durch das Energiespeicherelement während einer Totzeit der getakteten Konverterschaltung.

Damit wird ein unerwünschtes Springen des Wiedereinschaltzeitpunkts zwischen benachbarten Nulldurchgängen mit positivem Gradienten des Stroms durch das Energiespeicherelement während der Totzeit vermieden. Ein solches, unerwünschtes und möglicherweise mehrfach wiederholtes Springen (engl. toggle), insbesondere zwischen benachbarten Nulldurchgängen des Stroms, tritt vor Allem dann auf, wenn eine berechnete Dauer der Totzeit für die Einstellung eines geforderten mittleren Laststroms etwa mittig zu zwei benachbarten Nulldurchgängen mit positivem Gradienten des Stroms durch das Energiespeicherelement liegt. Dann tritt der Fall ein, dass je nach aktuell detektiertem Nulldurchgang ein Wiedereinschaltzeitpunkt von zwei benachbarten Nulldurchgängen des Stroms durch das Energiespeicherelement ausgewählt wird. Die Detektion eines Nulldurchgangs ist allerdings mit Ungenauigkeiten behaftet (engl.: "Jitter"). Der Wiedereinschaltzeitpunkt kann daher immer wieder wechseln, möglicherweise für jede Schalterperiode $t_{periode}$. Erfolgt eine Ermittlung eines Spitzenstroms $I_{peak}$, der diesen zeitlichen Wechsel des Wiedereinschaltzeitpunkts für denselben geforderten mittleren Laststrom kompensieren könnte, in idealer Weise, so ist keine Abweichung des tatsächlichen mittleren Laststroms von dem geforderten mittleren Laststrom feststellbar.

In der Realität führt allerdings eine nichtideale Bestimmung des Spitzenstroms $I_{peak}$ in Verbindung mit einem häufigen Wechsel der Auswahl des nächstliegenden Nulldurchgangs zu dem berechneten Wiedereinschaltzeitpunkt als ausgewählter Wiedereinschaltzeitpunkt zu kurzfristigen Schwankungen in dem mittleren Laststrom. Diese kurzfristigen Schwankungen des mittleren Laststroms können beispielsweise als Flackern eines Leuchtmittels wahrnehmbar sein.

Wird der Spitzenstrom $I_{peak}$ über eine Abschaltschwelle eingestellt, so kann der Wiedereinschaltzeitpunkt von Periode zu Periode $t_{periode}$, also sehr schnell, verändert werden. Die Abschaltschwelle kann hingegen, da sie zum Beispiel von einem Digital/Analog-Konverter erzeugt und einem Komparator zugeführt wird, nicht beliebig schnell verändert werden. Auch wenn die Abschaltschwelle so eingestellt werden kann, dass der ideale Wert für $I_{peak}$ erreicht wird, können Schwankungen im mittleren Laststrom auftreten, da die Abschaltschwelle nicht gleich schnell variiert werden kann wie es für den Wiedereinschaltzeitpunkt der Fall ist.

Wird eine Veränderung des Wiedereinschaltzeitpunkts zu einem von einem aktuellen Wiedereinschaltzeitpunkt verschiedenen berechneten neuen Wiedereinschaltzeitpunkt nur dann ausgeführt, wenn der neue Wiedereinschaltzeitpunkt des Schalters von dem aktuellen Wiedereinschaltzeitpunkt um eine Zeit größer als ein vorbestimmter Wert abweicht, so wird über diese Hysterese ein häufiger kurzzeitiger Wechsel (engl.: toggle) des Wiedereinschaltzeitpunkts unterbunden. Eine Stabilität des mittleren Laststroms wird verbessert, womit zum Beispiel eine Lichtabgabe des Leuchtmittels nun flackerfrei erfolgen kann.

Die Steuerschaltung kann dafür ausgelegt sein,

- bei einer inkrementellen Verlängerung des Wiedereinschaltzeitpunkts inkrementell bzw. sprunghaft die Einschaltzeitdauer zu verlängern und dann eine Regelung mit der Steuergröße "Einschaltzeitdauer" durchzuführen und,
- bei einer inkrementellen Verringerung des Wiedereinschaltzeitpunkts inkrementell bzw. sprunghaft die Einschaltzeitdauer zu verkürzen und dann eine Regelung mit der Steuergröße "Einschaltzeitdauer" durchzuführen.

Die Steuerschaltung kann dazu ausgelegt sein, eine inkrementelle Veränderung des Wiedereinschaltzeitpunkts durchzuführen, wenn die Regelung mit der Steuergröße "Einschaltzeitdauer" vorgegebene Mindest- oder Maximalwerte der Einschaltdauer oder einer diese beeinflussenden Größe zur Folge hat, also sozusagen diese Regelung mittels der Veränderung der Einschaltzeitdauer an ihre Grenzen stößt.

Entsprechend kann die Steuerschaltung dazu ausgelegt sein, dass wenn die Einschaltzeitdauer maximal ist und zugleich eine eingestellte lange Totzeit nicht ausreicht, einen gewünschten Strommittelwert zu erreichen, eine inkrementelle Verkürzung der Totzeit durch Wahl eines zeitlich früheren Wiedereinschaltzeitpunkts vorzunehmen. Die Einschaltzeitdauer ist maximal, wenn zum Beispiel ein maximal erlaubter Spitzenstromwert $I_{peak}$ durch den Induktivitätsstrom $I_L$ (Spulenstrom $I_L$) erreicht wird.

Eine inkrementelle Verlängerung des Wiedereinschaltzeitpunkts ist als eine zeitliche Verschiebung des Wiedereinschaltzeitpunkts zu einem um eine vorbestimmte Zeitdauer zeitlich später liegenden Zeitpunkt zu verstehen. Die vorbestimmte Zeitdauer (Inkrement) kann insbesondere eine oder mehrere Perioden der Resonanzschwingung umfassen. Die Verringerung des Wiedereinschaltzeitpunkts ist entsprechend eine zeitliche Verschiebung des Wiedereinschaltzeitpunkts zu einem um eine vorbestimmte Zeitdauer zeitlich früher liegenden Zeitpunkt.

Die Steuerschaltung kann dazu ausgelegt sein, die Veränderung der Einschaltzeitdauer des Schalters indirekt durch Vorgabe einer Abschaltschwelle für den Strom durch den Schalter oder direkt durch Vorgabe der Einschaltzeitdauer vorzugeben.

Die Steuerschaltung kann dazu ausgelegt sein, bei einem Übergang vom kritischen Modus in den Modus mit lückendem Strombetrieb den Wert für die Einschaltzeitdauer des Schalters sprunghaft zu verlängern.

Die Konverterschaltung kann bspw. ein Boost-, Buck-, Buck/Boost- oder Flyback-Konverter sein.

Weitere Merkmale, Eigenschaften und Vorteile der Erfindung werden nunmehr anhand von Ausführungsbeispielen und den beiliegenden Figuren der Zeichnungen erläutert.

Fig. 1        zeigt eine schematische Ansicht eines bekannten Buck-Konverters zum Betrieb einer LED-Strecke.

Fig. 2        zeigt einen Stromverlauf in Abhängigkeit von Schalterzustand und Leitfähigkeit der Diode in einem derartigen Konverter nach Fig. 1.

Fig. 3        zeigt die Anwendung des sog. Valley Switching in einem ausgewählten Dimmbereich.

Fig. 4        zeigt ein Blockschaltbild zur Ausführung der Erfindung.

Fig. 5        zeigt Signalverläufe bei der Ausführung der Erfindung.

Fig. 6        zeigt eine Implementierung der Erfindung mit zwei möglichen Zero-Cross Erfassungsschaltungen.

Fig. 7 bis 10    zeigen Signal- und Stromverläufe sowie eine schematische Schaltung in Fig. 9 zur Kompensation der Ausschaltverzögerung bei der Peak-Strom-Erfassung in getakteten Wandlern.

Fig. 11        zeigt einen Zeitverlauf eines vorgegebenen mittleren Laststroms $I_{avg\_nom}$.

Fig. 12        zeigt, zugeordnet zu dem Zeitverlauf des vorgegebenen Laststroms nach Fig. 11, berechnete Werte für eine Totzeit $t_{dead\_dom}$ und eingestellte Werte für die Totzeit $t_{dead}$.

Fig. 13        zeigt, zugeordnet zu dem Zeitverlauf des vorgegebenen Laststroms nach Fig. 11, berechnete Werte für eine Totzeit $t_{dead\_dom}$ und eingestellte Werte für die Totzeit $t_{dead}$ nach einer weiter verbesserten Ausführung mit einer Hysterese.

Fig. 14        zeigt weitere Zeitverläufe des vorgegebenen mittleren Laststroms $I_{avg\_nom}$ für vorgegebene Dimmverläufe.

Fig. 15        zeigt für die Zeitverläufe des vorgegebenen mittleren Laststroms nach Fig. 14 berechnete Werte für die Totzeit $t_{dead\_dom}$ und eingestellte Werte für die Totzeit $t_{dead}$ mit einer Hysterese.

Fig. 16        berechnete Werte für die Totzeit $t_{dead\_dom}$ und eingestellte Werte für die Totzeit $t_{dead}$ mit einer Hysterese für zeitlich ansteigende und für zeitlich abfallenden Werte des vorgegebenen Laststroms in einem Ausschnitt.

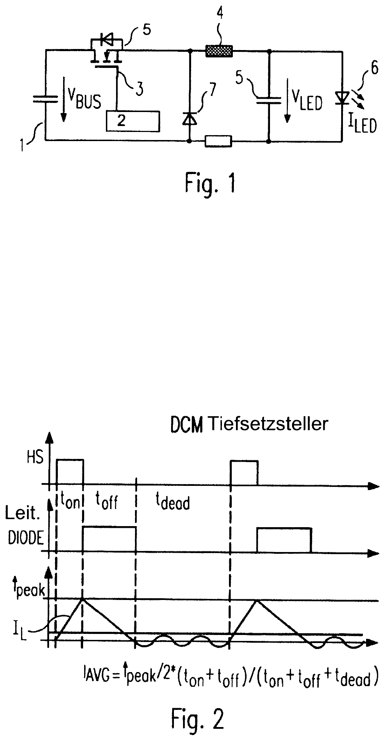

In Fig. 1 ist schematisch ein an sich bekannter Buck-Konverter 1 zum Betrieb einer Leuchtmittelstrecke 6 als Beispiel für eine typische Last des Buck-Konverters 1 gezeigt.

Dabei wird ausgehend von einer DC-Busspannung, auch mit $V_{Bus}$ bezeichnet, bei leitend Schalten eines Halbleiterschalters 5 (Schalter 5) eine Induktivität 4 aufgeladen, die sich bei dem ausgeschalteten Zustand des Schalters 5 über einen Kondensator $C_{BUCK}$ (oder alternativ direkt über eine Leuchtmittel-Last) entlädt.

Ausgehend von dem Kondensator $C_{BUCK}$ wird also eine DC-Betriebsspannung $V_{LED}$ für eine Leuchtmittelstrecke 6 bereitgestellt. Im eingeschalteten Zustand des Schalters 5 steigt die Spannung $V_{LED}$ durch Laden des Kondensators, während sie im ausgeschalteten Zustand des Schalters 5 absinkt. Somit kommt es zu einem variierenden Verlauf des Stroms $I_{LED}$ durch die Leuchtmittelstrecke 6, wobei das menschliche Auge bei entsprechender hochfrequenter Ansteuerung des Schalters 5 nur den zeitlichen Mittelwert wahrnimmt.

Der Schalter 5 wird durch eine Steuerschaltung 2 über einen Signaleingang (Steuereingang 3) angesteuert. Die Steuerschaltung kann ein ASIC oder bevorzugt ein Mikrokontroller sein.

Fig. 2 zeigt entsprechende Signal,- Spannungs- und Stromverläufe.

Das Signal HS ist der Pegel an dem Steuereingang 3 des Schalters 5. Während einer Zeitdauer $t_{on}$ ist dieser Schalter 5 leitend geschaltet, während er in den Zeitdauern $t_{off}$ und $t_{dead}$ nicht-leitend geschaltet ist.

In der Zeitdauer $t_{off}$ ist die Diode 7 in Fig. 1 leitend.

Der unterste Kurvenverlauf in Fig. 2 schließlich ist der Stromverlauf durch die Induktivität 4, der mit $I_L$ bezeichnet ist. Während der Einschaltzeitdauer $t_{on}$ des Schalters 5 steigt dieser Strom an, während er in der Ausschaltzeitdauer $t_{off}$ absinkt, bis er einen ersten (fallenden) Nulldurchgang vollzieht. Aufgrund von Resonanzeffekten kommt es dann zu einem Schwingungsverlauf während der Zeitdauer $t_{dead}$. Ein Wiedereinschalten in dieser Stromlücke erfolgt erfindungsgemäß immer zu einem zeitlichen Bereich (Zeitpunkt), in dem der Strom $I_L$ durch die Induktivität 4 einen ansteigenden Nulldurchgang vollzieht.

Die Einschaltzeitdauer $t_{on}$ kann von der Steuerschaltung 2 zeitgesteuert ausgegeben werden. Die Einschaltzeitdauer $t_{on}$ kann von der Steuerschaltung 2 vorgegeben werden, indem der Schalter 5 nicht-leitend geschaltet wird, sobald der ansteigende Schalterstrom eine vorgegebene obere Abschaltschwelle $I_{peak}$ erreicht.

Wie bereits eingangs erwähnt, führt ein Wiedereinschalten nur in diskreten Inkrementen zu den positiven Nulldurchgangsbereichen des Stroms dazu, dass im lückenden Betrieb, bzw. am Übergang vom kritischen Modus in den Modus mit lückendem Betrieb, Sprünge in der Lichtleistung auftreten können, da eben keine kontinuierliche Veränderung des Wiedereinschaltzeitpunkts erfolgen soll und somit die Speisung der Leuchtmittelstrecke 6 nicht kontinuierlich sein könnte.

Wenn beispielsweise im lückenden Betrieb die Leuchtmittelleistung verringert werden soll, muss sprunghaft ein zeitlich höherer Wiedereinschaltzeitpunkt für den Schalter 5 angesteuert werden. Gemäß der Erfindung wird nunmehr der somit drohende Leistungssprung dadurch ausgeregelt, dass bei festgehaltener Ausschaltzeitdauer eine $t_{on}$-Zeitregelung aufrechterhalten wird. D.h., bei einer Wahl eines vom aktuellen Zustands abweichenden Inkrements der positiven Nulldurchgänge des Stroms $I_L$ durch die Induktivität 4 wird gleichzeitig durch die Steuerschaltung 2 abgeschätzt, wie zum Beibehalten einer kontinuierlichen Leistungsverringerung die $t_{on}$-Zeit zuerst sprunghaft auf einen neuen Arbeitspunkt verlängert werden muss (wie gesagt, entweder durch eine echte zeitliche Vorgabe oder durch Erhöhung der Abschaltschwelle bei einer Hystereseregelung), bevor dann um diesen abgeschätzten Arbeitszeitpunkt herum eine $t_{on}$-Zeitregelung durchgeführt wird.

Im Gegensatz zum Stand der Technik wird also im lückenden Betrieb die Einschaltzeitdauer $t_{on}$ nicht festgehalten, sondern adaptiv gestaltet und eine $t_{on}$-Zeit Regelung aufrechterhalten.

Dies hat regelungstechnisch darüber hinaus den Vorteil, dass durchgehend eine $t_{on}$-Zeitregelung aufrechterhalten wird, also sowohl im lückenden Betrieb als auch im kritischen Modus beziehungsweise ggf. auch im kontinuierlichen Betriebsmodus.

Umgekehrt, wenn beispielsweise zum Ausführen eines Dimmens die Lichtleistung wieder erhöht werden soll, wird zuerst die Totzeit $t_{dead}$ durch einen Sprung der Nulldurchgang-Inkremente nach unten verringert, und gleichzeitig auch sprunghaft die $t_{on}$-Zeit auf einen geschätzten Arbeitspunkt verringert, um Lichtleistungssprünge zu vermeiden, indem dann an diesem geschätzten Arbeitspunkt die $t_{on}$-Zeitregelung fortgeführt wird.

Wichtig ist dabei nochmals zu betonen, dass sich die Einschaltzeitdauer $t_{on}$ des Schalters 5 entweder direkt aus einer $t_{on}$-Zeitregelung, aber auch indirekt, nämlich insbesondere durch Vorgabe einer Abschaltschwelle $I_{peak}$ für den Schalterstrom ergeben kann. Der neue Arbeitspunkt kann somit eine neue Einschaltzeitdauer oder eine neue Abschaltschwelle sein.

Ein Sprung des Totzeit-Inkrements, also des gewählten positiven Nulldurchgangs während der Zeit $t_{dead}$, kann auch dann ausgelöst werden, wenn die $t_{on}$-Zeitregelung beziehungsweise die Abschaltschwellenregelung an einem oberen beziehungsweise unteren vorgegebenen Grenzwert für die $t_{on}$-Zeit beziehungsweise die Abschaltschwelle $I_{peak}$ stößt.

Wenn beispielsweise bei Vorgabe eines neuen Dimmwerts entsprechend ein neuer zeitlicher Mittelwert für den LED-Strom angesteuert werden soll, ist der Ablauf wie folgt:

- Nach Vorgabe einer Veränderung, insbesondere eines Sprunges für den Sollwert für den mittleren LED-Strom wird von der Steuerschaltung 2 zuerst berechnet, wie lange im lückenden Betrieb die Totzeit $t_{dead}$ sein müsste, um den zeitlich mittleren Strom bei einer gegebenen Abschaltschwelle $I_{peak\ nom}$ zu erzielen. Diese berechnete Totzeit $t_{dead\_nom}$ wird normalerweise nicht auf einen Nulldurchgang des Stromes mit positiven Gradienten fallen, so dass dann einerseits der nächstliegenden Nulldurchgang mit positiven Gradienten gewählt wird, gleichzeitig aber auch die Differenz zwischen der berechneten Totzeit $t_{dead\_nom}$ und dem nächstliegenden Nulldurchgang bestimmt wird. Aufgrund dieser bekannten Differenz kann dann entsprechend der neue Arbeitspunkt der Abschaltschwelle $I_{peak}$ beziehungsweise der $t_{on}$-Zeitregelung entsprechend eingestellt werden, worauf dann die $t_{on}$-Zeitregelung an diesem Arbeitspunkt fortgeführt wird.

Alternativ kann die Steuerschaltung 2 für die Berechnung der neuen Abschaltschwelle $t_{dead}$ nicht die Differenz zwischen $t_{dead\_nom}$ und dem ausgewählten $t_{dead}$ verwenden, sondern den Absolutwert des ausgewählten $t_{dead}$ aufgrund des ausgewählten Wiedereinschaltzeitpunkts verwenden.

Die gegebene Abschaltschwelle $I_{peak\_nom}$ hängt auch von dem Sollwert des mittleren Ausgangsstroms $I_{avg\_nom}$ (Durchschnittsstrom $L_{avg\_nom}$) ab. Mit dieser vorgegebenen Abschaltschwelle $I_{peak\_nom}$ wird dann die Totzeit $t_{dead\_nom}$ berechnet.

Um ein unnötiges Springen zwischen unterschiedlichen Nulldurchgängen ("Valleys") zu verhindern, die gegebenenfalls als Sprung in der Leuchtmittel-Leistung sichtbar sein können, wird immer bei Vorgabe eines neuen Durchschnittsstroms $L_{avg\_nom}$ der vorher liegende Wert des Nulldurchgangs berücksichtigt, um ein Springen zwischen zwei unterschiedlichen Nulldurchgängen mit positiven Gradienten durch eine Art Hysterese-Regelung zu verhindern.

- Es wird somit bei Vorgabe eines neuen Durchschnittswerts für den Strom $L_{avg\_nom}$ durch Berechnung oder durch Abgleich über eine Tabelle, etc., zuerst eine neue Abschaltschwelle $I_{peak}$ definiert, worauf folgend dann die Totzeit

$t_{dead\_nom}$ im lückenden Betrieb berechnet wird.

Die Umsetzung eines einzustellenden Durchschnittsstromwerts $I_{avg\_nom}$ auf eine Abschaltschwelle $I_{peak}$ oder $t_{on}$-Zeit kann multidimensional sein, derart, dass die Wahl der Abschaltschwelle $I_{peak}$ (oder der direkten $t_{on}$-Zeit Vorgabe) unter Berücksichtigung weiterer Parameter erfolgt (über den einzustellenden Durchschnittsstromwert hinaus). Diese weiteren Parameter können beispielsweise sein: Die LED-Spannung $V_{LED}$, da diese einen Einfluss darauf hat, wie sensitiv der Durchschnittswert $I_{avg}$ des Stroms auf die Veränderung der Abschaltschwelle $I_{peak}$ oder der $t_{on}$-Zeit reagiert.

Ein weiterer Gesichtspunkt der Erfindung ist es, dass die Festlegung der Abschaltschwelle $I_{peak}$ oder der $t_{on}$-Zeit abhängig von dem zu erzielenden Dimmwert (ausgedrückt durch den Durchschnittsstrom $L_{avg\_nom}$) die Frequenz des Auftretens der Einschaltvorgänge festlegt. Vorzugsweise wird nunmehr bei einem Dimmsprung (also Sprung des Durchschnittswerts des Stroms $I_{LED}$ entsprechend $I_{avg\_nom}$) die Abschaltschwelle $I_{peak}$ so gelegt, dass sich möglichst eine konstante Frequenz des Auftretens der Einschaltvorgänge ergibt, also möglichst die Totzeit $t_{dead}$ konstant gehalten wird.

- Indessen ist es möglich, dass für unterschiedliche Dimmbereiche unterschiedliche Vorgaben für die einzustellende Schaltfrequenz festgelegt sind, so dass also in unterschiedlichen Dimmbereichen (also unterschiedliche Bereiche des Stroms $I_{LED}$) die konstant zu haltende Frequenz des Auftretens der Einschaltvorgänge des Schalters 5 unterschiedlich vorgegeben sein kann.

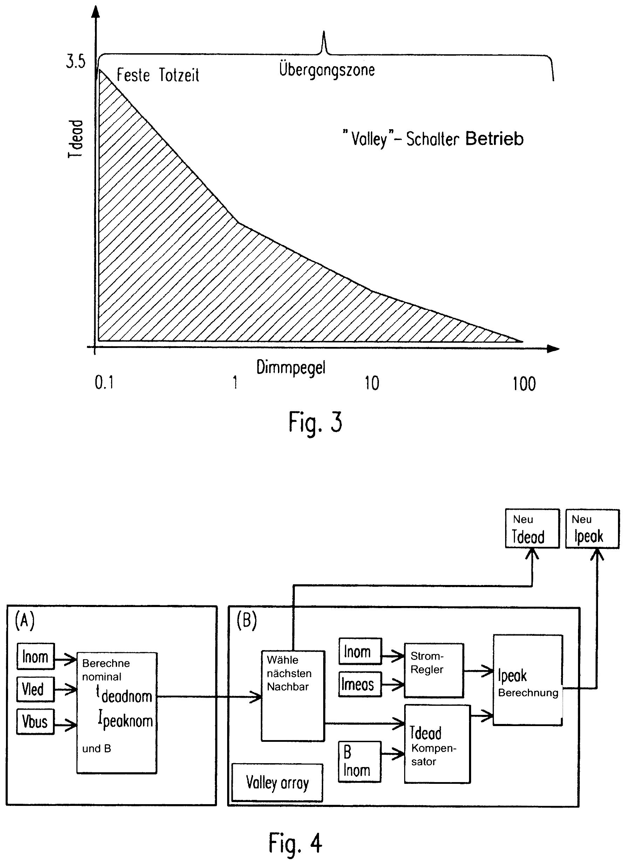

In Fig. 3 ist zu sehen, dass das erfindungsgemäße "Valley Switching", also das inkrementelle Springen zwischen unterschiedlichen Inkrementen an positiven Nulldurchgängen des Stroms durch das Energiespeicherelement (Induktivität 4) bevorzugt nur in einem oberen Dimmbereich, anschließend an 100% Nominalleistung der Leuchtmittelstrecke 6 ausgeführt wird.

Bei einem Herabdimmen von beispielsweise unterhalb von 10% Dimmlevel wird die Totzeit $t_{dead}$ im lückenden Betrieb derart groß, dass das abklingende Nachschwingen des Stroms $I_L$ durch die Induktivität 4 nicht mehr vorhanden ist bzw. keine Rolle mehr spielt. Somit kommt es zu einer Übergangszone, in der unterhalb des Dimmbereichs für den Valley Switching-Betrieb die Wiedereinschaltzeitdauer $t_{on}$ des Schalters 5 kontinuierlich verstellt werden kann. Ebenso kann die Totzeit $t_{dead}$ kontinuierlich für eine Veränderung des mittleren Ausgangsstroms $I_{avg}$ verändert werden.

Ist die Totzeit $t_{dead}$ sehr groß, so wird die Schalfrequenz des Schalters 5 entsprechend niedrig. Verluste aufgrund der Schaltvorgänge sind entsprechend niedrig. Bei geringem Dimmlevel kann daher die Totzeit $t_{dead}$ auch entsprechend kontinuierlich verändert werden.

Dieses kontinuierliche Erhöhen der Totzeit $t_{dead}$ im lückenden Betrieb stößt indessen bei der weiteren Verringerung des Dimmpegels beispielsweise unterhalb von 1% Nominalleistung auf Grenzen, da eine sehr lange Totzeit $t_{dead}$ ggf. zu optisch sichtbaren Effekten führen kann. Daher ist eine maximale Totzeit $t_{deadmax}$ vorgesehen. Wenn diese erreicht wird, wird die Totzeit $t_{dead}$ auf der maximalen Totzeit $t_{deadmax}$ festgehalten und eine weitere Verringerung der Leuchtmittelleistung kann dann beispielsweise nur durch andere Effekte, wie beispielsweise eine Amplituden-Verringerung, erzielt werden.

Fig. 4 zeigt eine schematische Blockdarstellung zur Ausführung der Erfindung.

Ein Block A bezeichnet dabei einen Berechnungsblock zur Berechnung der nominalen Totzeit $t_{dead\ nom}$ und der nominalen Abschaltschwelle $I_{peak\_nom}$.

Dabei wird für diese Berechnung berücksichtigt:

- der vorgegebene Sollwert $I_{avg\_nom}$ für den LED-Strom $I_{LED}$,
- der Wert der DC-Versorgungsspannung $V_{bus}$ für den getakteten Konverter 1 sowie
- die Leuchtmittelspannung $V_{LED}$.

Aus diesen Eingangswerten, sowie einem Wert der Induktivität $L_{BUCK}$ berechnet der Block A in Fig. 4 anhand einer Funktion oder einer Abgleichstabelle die nominalen Werte für die Totzeit $t_{dead\ nom}$ sowie die Abschaltschwelle $I_{peak\_nom}$ (oder die Einschaltzeitdauer $t_{on\_nom}$).

Der Block B dient dann zur Umsetzung der Totzeitregelung ausgehend von diesen berechneten Nominalwerten.

In einem ersten Block "select nearest neighbour" wird dasjenige "valley" (also der positive Nulldurchgang) gewählt, der der nominalen Totzeit $t_{dead\_nom}$ an nächsten kommt.

In diesem Block B ist vorab abgelegt die zeitliche Lage der "valleys", was in Fig. 4 mit "valley array" bezeichnet ist.

Das "valley", dass der $t_{dead\_nom}$ am nächsten kommt, wird als einzustellendes "valley" genommen und entsprechend wird die Totzeit mit dem Wert "new $T_{dead}$" eingestellt.

Alle Berechnungen im Block A sind außerhalb der eigentlichen Regelschleife und sind somit zeitunkritisch. Sie können somit leicht durch einen Mikrokontroller bewältigt werden.

Im Block B ist die eigentliche Stromregelung "current regulator" vorgesehen, der der Sollwert $I_{avg\_nom}$ sowie der aktuell gemessene Istwert für den LED-Strom $I_{MEAS}$ zugeführt wird.

Weiterhin ist eine Totzeit-Kompensationseinheit vorgesehen "$t_{dead\ compensator}$", die als Eingangsinformation das ausgewählte Valley von dem Block "select nearest neighbour,, sowie den zeitlichen Mittelwert des Stroms durch die LED-Strecke $L_{avg\_nom}$ erhält.

Um nunmehr die Abweichung und somit einen Sprung in der Leuchtmittelleistung zu verhindern, der durch die Abweichung des Valleys von der berechneten Nominaltotzeit $t_{dead\_nom}$ entsteht, wird die Ausgangsgröße der Stromregelung "current regulator" durch den Totzeit-Kompensator "$t_{deadcompensator}$", zur Verschiebung des Arbeitspunkts verändert, so dass sich daraus eine neue Abschaltschwelle für den Schalterstrom "new $I_{peak}$" ergibt.

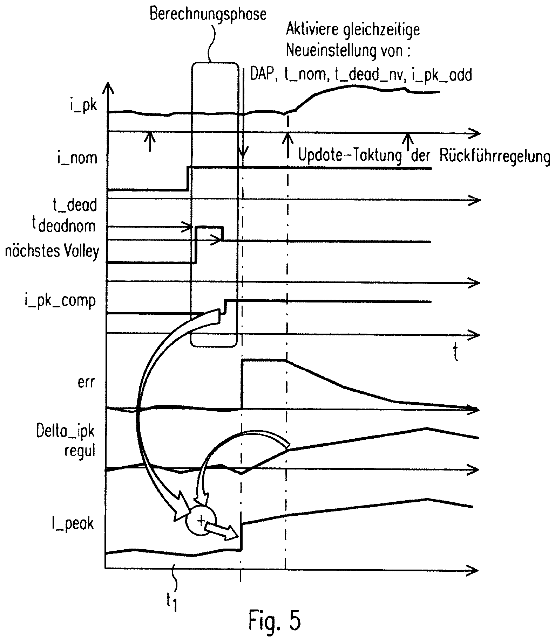

Diese Abläufe sollen nochmals anhand der Signalverläufe von Fig. 5 gezeigt werden.

Dabei wird das Szenario vorausgesetzt, dass zu einem Zeitpunkt t1 ein Sprung in der SollwertVorgabe $i_{\_nom}$ für den zeitlichen Mittelwert des Stromes $I_{avg\_nom}$ eingeht. Nach Eingang eines derartigen Sollwert-Sprungs schließt sich eine Berechnungsphase an, die benötigt wird, um die Berechnung durchzuführen, die in Fig. 4 dargestellt wird.

Wie in Fig. 5 zu sehen ist, erfolgt die Berechnung der für die Einstellung des neuen Sollwerts $I_{nom}$ notwendigen nominalen Totzeit $t_{deadnom}$. Tatsächlich wird indessen das nächstliegende Valley "nearest neighbor" zu der nominalen Totzeit $t_{dead\_nom}$ eingestellt.

Durch diese Abweichung der nominalen Totzeit $t_{dead\_nom}$ von der zeitlichen Lage des nächsten Valleys ergibt sich ein Kompensationswert $i_{pk\_comp}$, der von dem Block "$t_{dead\ compensator}$" in Fig. 4 unmittelbar zur sprunghaften Veränderung des Arbeitspunkts der Stromregelung verwendet wird. Durch diese sprunghafte Verstellung des Arbeitspunkts werden also tatsächlich die Sprünge in der Leuchtmittelleistung verhindert, da anderseits der Stromregler zwar auch diesen Regelfehler (Abweichung der tatsächlichen Totzeit $t_{dead}$ von der nominalen Totzeit $t_{dead\_nom}$) ausregeln würde, die zeitliche Dauer des Ausregelns indessen zu optisch sichtbaren Effekten führen könnte.

### ZX-Erfassungsschaltungen:

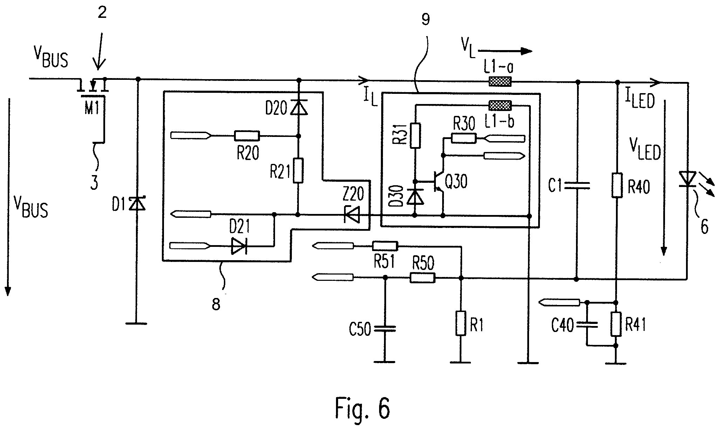

Mit Bezug auf Fig. 6 wird nunmehr eine Anwendung der Erfindung auf den Buck-Konverter 1 beschrieben. Dabei werden zwei mögliche Zero-Cross Erfassungsschaltungen 8, 9 erläutert, die alternativ oder gleichzeitig in einem Konverter 1 vorliegen können.

In Figur 6 ist ein Buck-Konverter 1 gemäß der vorliegenden Erfindung gezeigt, dessen Leistungspfad aufweist einen Buck-Schalter M1, eine Buck-Diode D1, einen von dem Konverter gespeisten Ausgangsfilter-Kondensator C1, der ein beliebiges Tiefpassfilter sein kann, sowie die Buck-Induktivität L1-A sowie einen Messwiderstand (Shunt) R1 zur Messung des Buck-Stroms.

### Diodenbasierte Schaltung 8:

Die Schaltung in Figur 6 weist einerseits eine erste Erfassungsschaltung 8 und eine zweite Erfassungsschaltung 9 auf, die alternativ oder gleichzeitig vorliegen können, und die jeweils ausgebildet sind, ein Signal zu erzeugen, das den Zeitpunkt wiedergibt, zu dem der Induktivitätsstrom $I_L$ durch die Buck-Induktivität L1-A die Nulllinie kreuzt, was im Englischen als ‚zero crossing ZX' bezeichnet wird.

Zuerst soll erläutert werden, die erste Erfassungsschaltung 8 für das ZX-Ereignis. Diese Schaltung weist auf zwei Dioden D20, D21, zwei ohmsche Widerstände R20, R21 sowie eine Zenerdiode Z20.

Diese Schaltung wird verwendet, um ein Signal zu erzeugen, das den Beginn der Totzeit $t_{dead}$ detektiert, also den ersten Abfall des Induktivitätsstroms $I_L$ auf Null. Während der Ausschaltzeitdauer des Schalters M1 sinkt der Strom $I_L$ von einem Maximalwert $I_{PK}$ auf Null. Während diesem Absinken ist die Spannung am Mittelpunkt (gemessen von der Kathode der Diode D1 gegen Masse-Potential) auf dem logischen Pegel "low". Das bedeutet, dass das Signal ZCD_1 filtered, das beispielsweise einem Pin eines Mikrocontrollers oder ASIC zugeführt werden kann, während dieser Zeit auch auf "low" gezogen ist, da die Diode D20 leitend ist.

Wenn der Strom $I_L$ den ersten Nulldurchgang vollzogen hat, wird der Stromfluss negativ, d.h. die Stromrichtung durch die Induktivität L1-A dreht sich um und die Spannung am Mittelpunkt steigt an. Das bedeutet, dass die Diode D20 sperrt und somit das Signal ZCD_1 filtered auf das Potential logisch "high" gezogen wird, nämlich durch die zugeführte Niedervolt-Versorgungsspannung $V_{DD}$ und die Widerstände R20, R21. Diese steigende Flanke (von low auf high) des Signals ZCD_1 filtered startet dann in der Steuerschaltung (beispielsweise einen Mikrokontroller) einen Zähler für die Totzeit $t_{dead}$. Dieser Zähler läuft, bis die gewünschte eingestellte Totzeit abgelaufen ist und dann die Steuerschaltung 2 über das Signal an den Steuereingang 3 wieder den Schalter M1 ein (leitend) schaltet.

Bei der in Figur 6 dargestellten Implementierung gibt die Steuerschaltung 2 während des Laufens des Zählers für die Totzeit ein Signal ZCD_Filter_1_out auf einem logisch hohen Pegel (high) aus, welches wiederum über die Diode D21 das Signal ZCD_1_filtered auf "high" zieht. Dies hat den Vorteil, dass dadurch ein erneutes Starten des Totzeit-Zählers vermieden wird, d.h. ein Neustarten bei weiteren steigenden Flanken des Signals ZCD_1 filtered werden damit verhindert bzw. ausgeblendet.

Es ist indessen auch möglich, dieses Ausblenden von weiteren steigenden Flanken (jedes Mal bei Stromrichtungsumkehr) beispielsweise per Software-Lösung in einem Mikrokontroller zu erreichen, so dass dann die Ausgabe des Signals ZCD Filter_1 out und die Diode D21 nicht notwendig wären.

**Erfassungsschaltung 9 mit Hilfswicklung und Transistor:**

Es soll nunmehr die zweite Erfassungsschaltung 9 für das ZX-Ereignis erläutert werden.

Diese Schaltung wird verwendet, um mögliche Wiedereinschaltzeitpunkte für den Schalter M1 zu bestimmen (für den Fall, dass als die Wiedereinschaltzeitpunkte nicht vorab aufgrund der bekannten Bauteildimensionierungen abgelegt bzw. berechnet sind).

Bekanntlich werden geringe minimale Schaltverluste erreicht, wenn die Spannung über den Schalter M1 bei seinem Einschalten gering und möglichst ein Minimum ist, was bedeutet, dass die Mittelpunktspannung (Kathode der Diode D1) zu diesem Bereich ein Maximum aufweist. Es geht also darum, dass diejenigen Zeitpunkte (Zählwerte des Totzeit-Zählers) ermittelt werden, bei denen die Mittelpunktspannung möglichst hoch ist.

Der Zusammenhang zwischen Spannung über einer Induktivität und Strom durch die Induktivität ist bekanntlich gegeben durch:

$$u_L(t) = L * \frac{di_L}{dt}$$

Dies bedeutet, dass die Spannung über der Induktivität L1-A positiv ist, wenn die Steigung des Stroms $I_L$ positiv ist, und die Spannung negativ ist, wenn die Steigung des Stroms negativ ist. Aufgrund der 90° Phasenverschiebung zwischen Strom und Spannung an einer Induktivität tritt ein Spannungs-Maximum beim positiv gehenden Nulldurchgang des Stromes auf, oder ein Spannungs-Minimum beim negativ gehenden Nulldurchgang des Stromes. Eine Umkehrung der Spannung erfolgt jeweils beim Maximum und Minimum des Stromes durch die Induktivität.

Um minimale Schaltverluste zu erzielen, soll also somit der Schalter M1 beim positiv gehenden Nulldurchgang des Stromes $I_L$ wieder eingeschaltet werden. Eine Umkehrung der Spannung über die Induktivität L1-A erfolgt bei einem Strom-Minimum vor diesem Null-Durchgang mit positivem Gradienten. Diese Umkehrung der Spannung über der Induktivität wird gemäß der Erfindung verwendet, um die optimalen Wiedereinschaltzeitpunkte zu detektieren. Genauer gesagt liegt der detektierte Zeitpunkt bei diesem Ansatz gemäß der Erfindung um eine halbe Halbwelle der Schwingung des Induktivitätsstroms $I_L$ nach seinem ersten Nulldurchgang vor dem optimalen Zeitpunkt für das Wiedereinschalten.

Indessen liegen bei realen Schaltungen Einschaltverzögerungen zwischen der Ausgabe eines Signals und dem tatsächlichen Wiedereinschalten des Schalters M1 vor, so dass bei einem Auslösen des Einschaltvorgangs in den Schalter M1 bei dem Strom-Minimum zeitlich vor dem positiv gehenden Nulldurchgang in der Praxis dann das tatsächliche Einschalten des Schalters M1 etwa auf den optimalen Zeitpunkt, also dem zeitlichen Bereich des positiv gehenden Nulldurchgangs des Induktivitätsstroms $I_L$ fällt.

Gemäß der Erfindung ist wie ersichtlich eine Hilfswicklung L1-B vorgesehen, die mit der eigentlichen Induktivität L1-A im Leistungspfad des Konverters gekoppelt ist. Wenn die Spannung über L1 positiv ist, sperrt die Diode D30 und der Schalter Q30 ist eingeschaltet. Das Signal ZCD_1 das einem Pin einer Steuereinheit, insbesondere der Steuerschaltung 2, zugeführt werden kann, ist somit logisch niedrig (low). Wenn die Spannung über L1 negativ ist, leitet die Diode D30 und der Schalter Q30 ist ausgeschaltet. Somit wird das Signal ZCD_1 über den Widerstand R30 auf das Potential logisch hoch (high) gezogen, was dem Potential einer zugeführten Niedervolt-Spannungsversorgung VDD entspricht.

Das bedeutet, dass die fallenden Flanken des Signals ZCD_1 die Zeitpunkte wiedergibt, bei denen sich die Spannung über der Induktivität von negativ nach positiv verändert, was bedeutet, dass der Strom $I_L$ ein Minimum aufweist, auf das dann mit einer gewissen zeitlichen Verzögerung ein positiver Nulldurchgang des Induktivitäts-Stroms erfolgt. Bei jeder dieser fallenden Flanken des Signals ZCD_1 wird der aktuelle Zähler-Wert des Totzeit-Zählers in einem Speicher "Valley-Array" abgelegt.

Der Regel-Algorithmus der die Soll-Totzeit berechnet, wählt nun einen der Werte in diesem abgelegten Valley-Array aus. Der Regelalgorithmus (Block B) sucht sich dann, basierend auf $t_{dead\_nom}$, das Valley aus welches am nächsten zu $t_{dead\_nom}$ liegt. Dieses $t_{dead\_valley}$ wird dann eingestellt ("New Tdead" in Fig. 4)

Typischerweise wird die berechnete Totzeit von den verfügbaren Valley-Werten abweichen, sodass eine neue Abschaltschwelle $I_{peak\_comp}$ für den Peak-Strom berechnet wird (oder eine neue $t_{on}$-Zeit berechnet wird), um mit der ausgewählten Totzeit $t_{dead\_valley}$ den gewünschten durchschnittlichen Strom $I_{avg\_nom}$ zu erreichen.

In der dargestellten Implementierung sind Messpfade vorgesehen, die wie folgt definiert werden können:

R40, R41 und C40: Diese dienen zur LED-Spannungsmessung.

R50, C50: Diese dienen zur Mittelwertbildung der Messspannung an dem Messwiderstand R1, um somit den Durchschnittsstrom zu ermitteln, der dann über einen AD-Wandler der Steuerschaltung zugeführt werden kann.

R51: Dieses Signal wird mittels eines Komparators mit einem eingestellten Schwellwert verglichen. Wenn der Schwellenwert erreicht wird, wird der Schalter M1 abgeschaltet. Dies ist also eine mögliche Implementierung für eine Schwellenwertabschaltung.

**Kompensation der Ausschaltverzögerung bei der Peak-Strom Erfassung in getakteten Wandlern**

Wie bereits oben beschrieben, gibt es bei getakteten Konvertern (getakteten Wandlern) mit primärseitig angesteuertem Schalter 5 den Ansatz, dass der Schalter nicht-leitend geschaltet wird, wenn der Strom durch den eingeschalteten Schalter 5 auf einen vorgegebenen Ausschaltwert $I_{peak}$ (Peak-Strom, Spitzenstrom) angestiegen ist.

Dabei besteht das Problem, dass aufgrund von Bauteil-inhärenten Ausschaltverzögerungen eine Verzögerung zwischen dem tatsächlichen Erreichen des Peak-Strom-Werts $I_{peak}$ und dem Zeitpunkt des Ausschaltens entsteht.

Diese Ausschaltverzögerungen werden verursacht beispielsweise durch einen sogenannten Propagation-Delay des Komparators und des Gate-Treibers, sowie endliche Flankensteilheiten und parasitäre Kapazitäten. Der tatsächlich fließende Peak-Strom und der somit sich ergebende zeitliche Mittelwert ist somit verfälscht, wobei diese Abweichung abhängt von der Steilheit des Stroms dl/dt.

Typische Ausschaltverzögerungen können beispielsweise im Bereich von mehreren 100 Nanosekunden liegen, was bei einem steilen Stromanstieg dl/dt des Schalterstroms beispielsweise dazu führen kann, das statt einem gewünschten Ausschaltwert von 1 Ampere tatsächlich der Peak-Strom bei 1,2 Ampere abgeschaltet wird.

Der vorliegende Aspekt der Erfindung beschäftigt sich nunmehr mit diesem Problem. Dieser Aspekt der Erfindung kann mit den zuvor in der vorliegenden Beschreibung genannten Aspekten kombiniert werden, aber natürlich unabhängig davon bei jeglichen anderen primärseitig aktiv getakteten Wandlern, beispielswiese Buck-Konvertern 1, Anwendung finden.

Die Steilheit des Stromanstiegs durch den primärseitigen Schalter 5 hängt unter anderem von der Spannung $V_{LED}$ über die Last, beispielsweise eine LED-Last ab. Bei niedrigen LED-Spannungen $V_{LED}$ ist der Stromanstieg sehr steil, was zu einem großen Überschießen (engl. "overshoot") des Peak-Stroms führt. Umgekehrt führt eine hohe LED-Spannung $V_{LED}$ zu einem weniger steilen Anstieg des Stroms bei eingeschaltetem primärseitigen Schalter des getakteten Konverters, was wiederum zu einem geringeren Überschießen ("overshoot") des Peak-Stroms führt.

Gemäß der Erfindung wird nunmehr der Abschalt-Schwellenwert abhängig von der erfassten ausgangsseitigen Spannung, insbesondere einer gemessenen LED-Spannung eingestellt. Dabei wird bei hoher erfasster LED-Spannung $V_{LED}$ der Schwellenwert $I_{peak}$ verhältnismäßig wenig verringert (beispielsweise von 1 Ampere auf 0,95 Ampere), während er bei niedriger erfasster LED-Spannung $V_{LED}$ wesentlich stärker verringert wird, beispielsweise von einem Nennwert von 1 Ampere auf 0,9 Ampere, so dass sich dann tatsächlich aufgrund der Ausschaltverzögerungen in beiden Fällen der gewünschte Peak-Strom von 1 Ampere ergibt.

Die Anforderungen an die Genauigkeit des Einhaltens des Peak-Stroms sind besonders groß, wenn der Peak-Strom beispielsweise wie oben geschildert, berechnet wird. Wie in der vorliegenden Beschreibung weiter oben erläutert wird, gibt es den Ansatz, dass passend zu einer stufenweise (inkrementell) einstellbaren Totzeit $t_{dead}$ ein nötiger Peak-Strom $I_{peak\_comp}$ berechnet und sprunghaft eingestellt wird, um einen gewünschten Strom-Mittelwert $I_{avg}$ zu erreichen. Jede Abweichung im realen Peak-Strom vom berechneten, gewünschten Wert $I_{peak\_comp}$ führt zu einem Fehler im Mittelwert $I_{avg}$. Daher ist es von Bedeutung, dass der real im Wandler sich einstellende Peak-Strom mit dem berechneten (gewünschten) Peak-Strom $I_{peak\_comp}$ übereinstimmt.

Bei derartiger Vorausberechnung eines nötigen Peak-Stroms bei sprunghaft veränderter Totzeit $t_{dead}$ (im diskontinuierlichem Modus des Wandlers) ist eine Kompensation der realen Ausschaltverzögerung besonders wichtig.

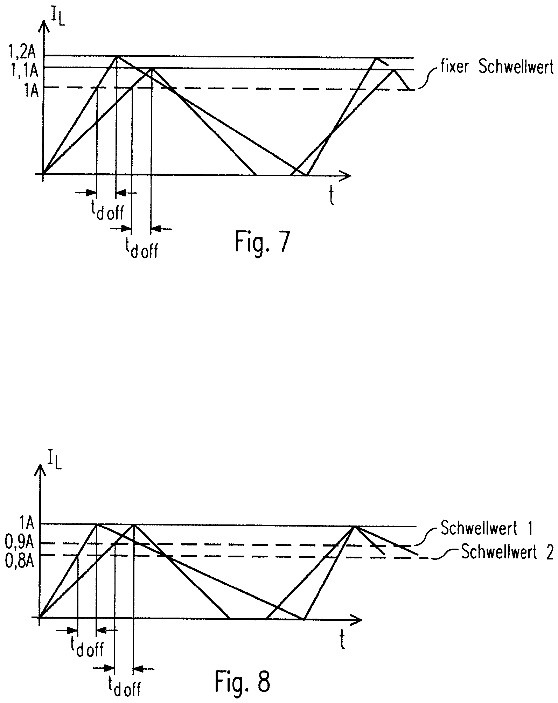

Fig. 7 zeigt, wie sich bei zwei unterschiedlichen Arbeitspunkten (Steigung des Stroms durch die Buck-Induktivität bei leitendem Schalter 5) real ein unterschiedlicher Peak-Strom einstellen kann. Wie in Figur 7 ersichtlich, kann bei einem Abschaltschwellenwert von 1A je nach Arbeitspunkt sich beispielsweise ein realer Peak-Strom von 1,2A oder 1,1A einstellen, auch wenn die Ausschaltverzögerung (die ja bauteilbedingt ist) konstant ist.

Gemäß der Erfindung werden nunmehr die Schwellenwerte je nach Arbeitspunkt variiert, um die Ausschaltverzögerung zu kompensieren.

Dies ist in Fig. 8 gezeigt.

In einem ersten Fall ist der Abschaltschwellenwert auf 0,9A und im zweiten Fall auf 0,8A gesetzt. Aufgrund der Ausschaltverzögerung ergibt sich dann bei beiden Szenarien (mit unterschiedlicher Steigung des Stroms durch die Induktivität 4) jeweils der gewünschte (beispielsweise vorausberechnete) Peak-Strom von 1A und die Ausschaltverzögerung ist somit diesbezüglich kompensiert.

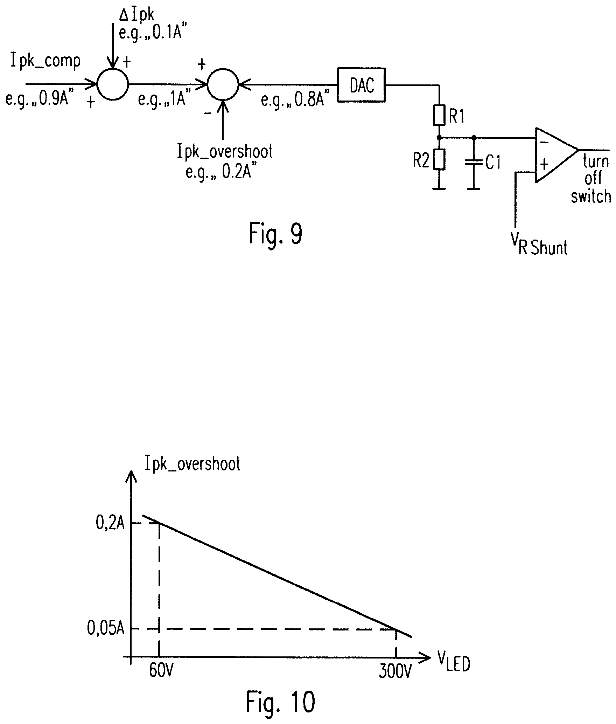

In Fig. 9 ist eine mögliche Implementierung dieser Kompensation dieser Ausschaltverzögerung gezeigt.

Es wird ein beispielsweise berechneter Peak-Strom $I_{peak\_comp}$ vorgegeben, der beispielsweise aus einem gewünschten Dimmwert (Strom-Mittelwert) und einer gewählten Totzeit berechnet ist, wobei dieser berechnete Peak-Strom $I_{peak\_comp}$ durch das Ausgangssignal eines Reglers, beispielsweise eines Integral-Reglers, deltalpk leicht korrigiert wird. Die Summe beider Pfade ergibt dann einen gewünschten Peak-Strom von beispielsweise 1A. Je nach Arbeitspunkt wird nunmehr ein Korrekturwert $I_{pk\_overshoot}$ von diesem berechneten gewünschten Zielwert abgezogen. Bei kleinen LED-Spannungen mit steilem Stromanstieg (großes dI/dt) wird mit einem verhältnismäßig hohem Wert korrigiert (beispielsweise kann der Wert $I_{pk\_overshoot}$ 0,2A betragen).

Bei hohen LED-Spannungen $V_{LED}$ mit flachem Stromanstieg (niedriges dI/dt) wird entsprechend weniger stark korrigiert (dann kann beispielsweise der Wert von $I_{pk\_overshoot}$ 0,1A betragen).

Nach Abzug dieses Korrektur- bzw. Kompensationsfaktors $I_{pk\_overshoot}$, wird der digitale Peak-Strom-Wert in einem DA-Wandler DAC in einen analogen Schwellenwert umgesetzt. Mittels einer optionalen Pegelanpassung und Filterung (mittels der Widerstände R1, R2 und dem Kondensator C1 in Fig. 9) wird der Schwellenwert zu einem Komparator geführt, der den Schwellenwert mit dem tatsächlichen Spannungsabfall beispielsweise an einem Shunt (Messwiderstand) vergleicht, wobei der Spannungsabfall an dem Shunt den Strom durch die Buck-Induktivität wiedergibt. Wenn der gemessene Strom (bzw. die dabei abfallende Spannung) den Schwellwert erreicht, bzw. überschreitet, schaltet der Komparator seinen Ausgang, was zu einem Abschalten des Buck-Schalters 5 führt.

Erfindungsgemäß wird der Faktor "$I_{peak\_overshoot}$" in Abhängigkeit der gemessenen LED-Spannung $V_{LED}$ bestimmt, beispielsweise gemäß einer analytischen Funktion oder einer abgelegten Tabelle, die die Funktion beispielsweise gemäß Fig. 10 wiedergibt. Indessen können auch andere Möglichkeiten verwendet werden, um eine Information bezüglich der Steilheit des Stromanstiegs durch den Schalter 5 zu bestimmen. Infrage kommen dabei die Verwendung von wenigstens einem von dem Wert der Induktivität 4, der Eingangsspannung $V_{bus}$ oder der Ausgangsspannung $V_{LED}$ sowie beliebige Kombinationen davon.

Der Zusammenhang zwischen dem Korrekturwert $I_{peak\_overshoot}$ und dem gewählten Parameter ist bei einem Beispiel von Fig. 10 linear (lineare Abhängigkeit der Spannung über der LED Strecke $V_{LED}$). Indessen kann diese Abhängigkeit auch nicht linear sein.

Es ist auch möglich, dass der Korrekturfaktor $I_{peak\_overshoot}$ kontinuierlich oder in regelmäßigen Abständen berechnet wird. Während der Ausschaltverzögerung $t_{doff}$ steigt der Buck-Strom um einen Wert $I_{pkOV}$ an, sodass bei konstanter Ausschaltverzögerung daher zu jeder Zeit der zu korrigierende Overshoot-Wert $I_{pk\_ov}$ berechnet werden kann, nach folgender Formel:

$$V_{Bus} - V_{LED} = L * \frac{I_{pk\_ov}}{t_{doff}} \rightarrow I_{pk\_ov} = t_{doff} * \frac{V_{Bus} - V_{LED}}{L}$$

Dabei bezeichnet L den Wert der Induktivität 4 des getakteten Konverters 1.

Falls die Bestimmung der Einschaltzeitdauer nicht indirekt über einen Komparator-Schwellenwert passiert, sondern direkt durch die Vorgabe der Einschaltzeitdauer $t_{on}$, kann natürlich ganz einfach die Einschaltzeitdauer $t_{on}$ um die Ausschaltverzögerung $t_{doff}$ verringert werden, um den negativen Effekt der Ausschaltverzögerung $t_{doff}$ zu kompensieren.

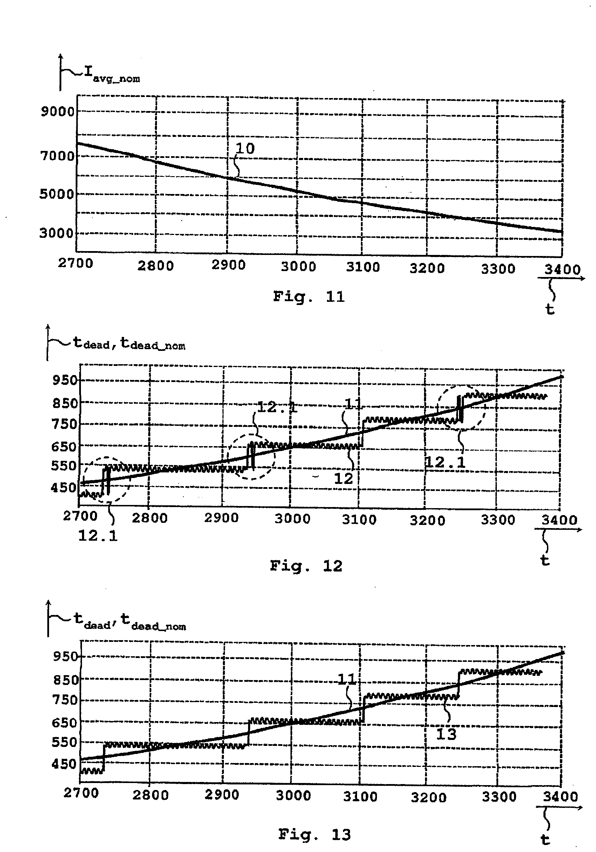

Fig. 11 zeigt einen Zeitverlauf eines vorgegebenen Laststroms $I_{avg\_nom}$. Auf der Abszisse ist die Zeit t für einen Zeitausschnitt eines Dimmvorgangs einer Leuchtmittelstrecke 6, zum Beispiel eines langsamen Dimmens über 4 Sekunden für einen Übergang von einem Dimmniveau (Dimmwert) 100 % auf ein Dimmniveau von 1% Prozent aufgetragen. In Fig. 11 ist lediglich ein Ausschnitt des Dimmvorgangs zeichnerisch dargestellt. Für den vollständigen Dimmvorgang ist der erreichte Wert auf der y-Achse zu Abschluss des Dimmvorgangs auf exakt 1 % des Anfangswerts gefallen.

In Richtung der Ordinate ist in Fig. 11 der Zieldimmwert in Form eines nominalen mittleren Laststroms $L_{avg\_nom}$ aufgetragen. Der Dimmvorgang für das Leuchtmittelstrecke 6 wird durch einen gewünschten abfallenden Verlauf 10 des nominalen mittleren Laststroms $I_{avg\_nom}$ gekennzeichnet, den der getaktete Konverter 1 an seinem Ausgang als einem dem Nominalwert $I_{avg\_nom}$ möglichst entsprechenden Istwert des mittlerer Laststroms $L_{avg}$ bereitstellt.

Fig. 12 zeigt zugeordnet zu dem zeitlichen Verlauf 10 des vorgegebenen Laststroms $I_{avg\_nom}$ nach Fig. 11, berechnete Werte für die Totzeit $t_{dead\_dom}$ und eingestellte Werte für die Totzeit $t_{dead}$. Auf der Abszisse der Fig. 12 ist die Zeit t für den Zeitausschnitt des Dimmvorgangs nach Fig. 11 aufgetragen.

Die berechnete Totzeit $t_{dead\_nom}$ zeigt einen gegenläufig zu dem abfallenden Verlauf 10 des nominalen mittleren Laststroms $I_{avg\_nom}$ ansteigenden Verlauf 11. Der getaktete Konverter 1 erzeugt den sinkenden Laststrom $I_{avg}$ mit einer Vergrößerung der berechneten Totzeit $t_{dead\_nom}$. Da ein Wiedereinschalten des Schalters 5 lediglich zu diskret beabstandeten Zeitpunkten erfolgen soll, erfolgt eine Vergrößerung der tatsächlich eingestellten Totzeit $t_{dead}$ lediglich in diskreten Schritten. Dies führt zu dem in Fig. 12 dargestellten stufenförmig ansteigenden Verlauf 12 der Totzeit $t_{dead}$ über die Zeit t für den Zeitausschnitt des Dimmvorgangs der Leuchtmittelstrecke 6 in Fig. 11.

Es ist in Fig. 12 zu erkennen, dass stets der, der berechneten (nominalen) Totzeit $t_{dead\_nom}$ nächstliegende Nulldurchgang des Induktivitätsstroms $I_L$ ausgewählt wird, und damit den aktuellen Wert für $t_{dead}$ bestimmt. Fig. 12 zeigt für alle Übergänge von einem niedrigeren Wert der Totzeit $t_{dead}$ zu einem nächsthöheren Wert der Totzeit $t_{dead}$, dass die Schwelle bei 50% einer Periode des Schwingungsvorgangs des getakteten Konverters 1 liegt. Zeitlich entspricht dies genau der Hälfte des Abstands zweier "Täler", also zweier negativer Halbwellen des Induktivitätsstroms $I_L$ oder einer halben Periodendauer der Resonanzschwingung.

Fig. 12 zeigt darüber hinaus, dass bei drei Übergängen 12.1 der insgesamt vier dargestellten Übergänge des Verlaufs 12 der Totzeit $t_{dead}$ zu einem nächsthöheren Wert der Totzeit $t_{dead}$ ein kurzeitiger Wechsel (engl.: toggle) zwischen zwei benachbarten Nulldurchgängen mit positivem Gradienten stattfindet.

Dieser kurzeitige Wechsel zwischen benachbarten diskreten Wiedereinschaltzeitpunkten beruht auf einer nichtidealen Bestimmung des Spitzenstroms $I_{peak}$ in Verbindung mit einem häufigen Wechsel des zu dem berechneten Wiedereinschaltzeitpunkt nächstliegenden positiven Nulldurchgangs des Induktivitätsstroms $I_L$. Auch unterliegt die Detektion der Valleys Schwankungen. Die detektierten möglichen Wiedereinschaltzeitpunkte schwanken. Damit kommt es zu kurzfristigen Schwankungen in dem mittleren Laststrom $L_{avg}$ und damit $I_{LED}$, die beispielsweise als Flackern der Lichtabgabe der Leuchtmittelstrecke 6 wahrnehmbar sein können.

Wird eine Veränderung des Wiedereinschaltzeitpunkts zu einem von einem aktuellen Wiedereinschaltzeitpunkt verschiedenen berechneten neuen Wiedereinschaltzeitpunkt nur dann ausgeführt, wenn der neue Wiedereinschaltzeitpunkt des Schalters von dem aktuellen Wiedereinschaltzeitpunkt um eine Zeit größer als ein vorbestimmter Wert, insbesondere größer als 50 % der Periodendauer der Resonanzschwingung abweicht, so wird über diese Hysterese ein häufiger kurzzeitiger Wechsel des Wiedereinschaltzeitpunkts unterbunden. Eine Stabilität des mittleren Laststroms wird verbessert, womit zum Beispiel eine Lichtabgabe des Leuchtmittels flackerfrei erfolgen kann.

Dies ist Fig. 13 zu entnehmen. Fig. 13 zeigt, zugeordnet zu dem Zeitverlauf des vorgegebenen Laststroms $I_{avg\_nom}$ nach Fig. 11, berechnete Werte für eine Totzeit $t_{dead\_dom}$ und eingestellte Werte für die Totzeit $t_{dead}$ nach einer weiter verbesserten Ausführung mit einer Hysterese.

Der vorbestimmte Wert ist in dem Ausführungsbeispiel nach Fig. 13 zu 10/16 bzw. 62.5 % gewählt. Das bedeutet, dass für den Dimmvorgang in Richtung auf eine geringere Lichtabgabe bzw. einen geringeren mittleren Laststrom $I_{avg}$, eine der berechneten Totzeit $t_{dead\_nom}$ benachbarte geringere Totzeit $t_{dead}$ eingestellt bleibt, bis die berechnete Totzeit $t_{dead\_nom}$ um mehr als 10/16 der Periodendauer der Resonanzschwingung von der aktuell gewählten und eingestellten Totzeit $t_{dead}$ abweicht.

Fig. 13 zeigt in dem dargestellten stufenförmigen Verlauf 13 der Totzeit $t_{dead}$ die mittels der eingeführten Hysterese erreichte Unterdrückung der kurzeitigen Wechsel bei den Übergängen 12.1 des Verlaufs 12 der Totzeit $t_{dead}$ zu einem nächsthöheren Wert der Totzeit $t_{dead}$ in Fig. 12.

Damit wird beispielsweise eine verbesserte, da flackerfreie Lichtabgabe der Leuchtmittelstrecke 6 durch eine erhöhte zeitliche Stabilität des mittleren Laststroms $I_{avg}$ erreicht.

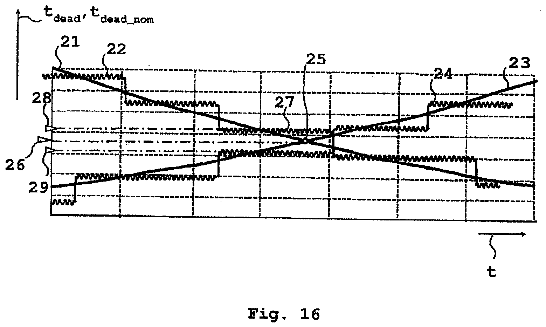

Die in der vorstehend diskutierten Ausführung des getakteten Konverters 1 eingeführte Hysterese bewirkt weiter, dass sich für einen bestimmten Dimmwert des Laststroms $I_{avg\_nom}$ unterschiedliche Arbeitspunkte des getakteten Konverters 1 ergeben können. Die unterschiedlichen Arbeitspunkte sind jeweils durch eine eingestellte Totzeit $t_{dead}$ und einen eingestellten Spitzenstrom $I_{peak}$ gekennzeichnet. Dies wird mit Bezug zu Fig. 16 weiter ausgeführt.

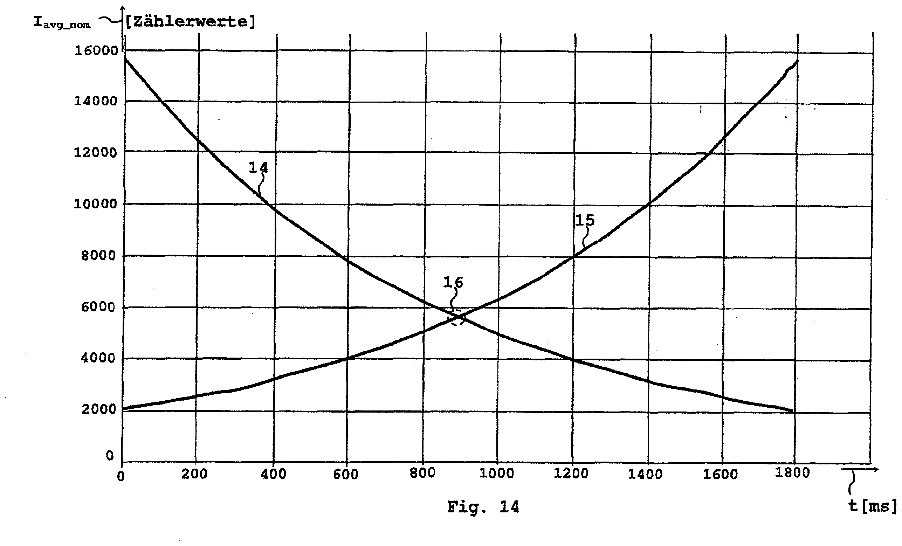

Fig. 14 zeigt zwei weitere Zeitverläufe des vorgegebenen mittleren Laststroms $I_{avg\_nom}$ für den getakteten Konverter 1 über der in Richtung der Abszisse aufgetragenen Zeit t. Der vorgegebene mittlere Laststrom ist in repräsentativen Digitalwerten angegeben.

Der erste Verlauf 14 stellt einen Dimmvorgang in Richtung auf einen geringeren mittleren Laststrom $I_{avg}$ dar.

Der zweite Verlauf 15 stellt einen Dimmvorgang in Richtung auf einen höheren mittleren Laststrom $I_{avg}$ dar.

Der erste Verlauf 14 des vorgegebenen mittleren Laststroms $I_{avg\_nom}$ und der zweite Verlauf 15 des vorgegebenen mittleren Laststroms $I_{avg\_nom}$ schneiden sich in einem Schnittpunkt 16. Schnittpunkt 16 ist durch einen zugeordneten Wert des vorgegebenen mittleren Laststroms $I_{avg\_nom}$ gekennzeichnet der sowohl Teil des Verlaufs 14 als auch des Verlaufs 15 der Dimmvorgänge des mittleren Laststroms $I_{avg}$ ist.

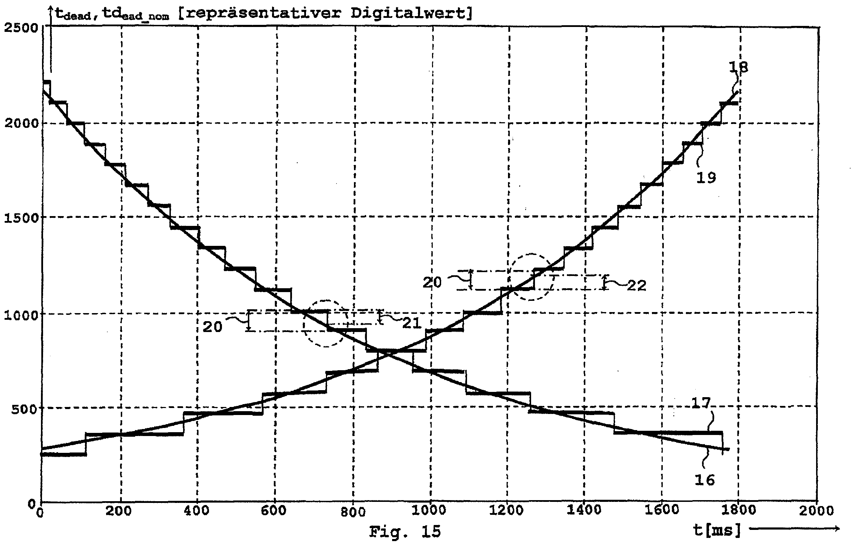

Fig. 15 zeigt für die zeitlichen Verläufe 14, 15 des vorgegebenen Laststroms nach Fig. 14 berechnete Werte für die Totzeit $t_{dead\_dom}$ und eingestellte Werte für die Totzeit $t_{dead}$ mit einer Hysterese.

Der erste Verlauf 16 der berechneten mittleren Totzeit $t_{dead\_nom}$ stellt die berechnete Totzeit $t_{dead\_nom}$ für den zweiten Verlauf 15 des vorgegebenen mittleren Laststroms $I_{avg\_nom}$ für einen Dimmvorgang in Richtung auf einen höheren mittleren Laststrom $I_{avg}$ dar.

Die Kurve 17 ist die tatsächlich eingestellte Totzeit $t_{dead}$ zugehörig zu dem ersten Verlauf 16 der berechneten mittleren Totzeit $t_{dead\_nom}$. Die Totzeit $t_{dead}$ verringert sich mit zunehmender Zeit t. Damit erhöht sich der Dimmwert hin zu einer höheren Lichtabgabe der Leuchtmittelstrecke 6 aufgrund eines zunehmenden mittleren Laststroms $I_{avg}$.

Der zweite Verlauf 18 der berechneten mittleren Totzeit $t_{dead\_nom}$ stellt die berechnete Totzeit für den ersten Verlauf 14 des vorgegebenen mittleren Laststroms $I_{avg\_nom}$ für einen Dimmvorgang in Richtung auf einen verringerten mittleren Laststrom $I_{avg}$ dar. Damit verringert sich der Dimmwert hin zu einer schwächeren Lichtabgabe der Leuchtmittelstrecke 6 aufgrund eines abnehmenden mittleren Laststroms $I_{avg}$.

Die Kurve 19 ist die tatsächlich eingestellte Totzeit $t_{dead}$ zu dem zweiten Verlauf 18 der berechneten mittleren Totzeit $t_{dead\_nom}$ entsprechendem einem Dimmvorgang hin zu kleineren Dimmwerten.

In Fig. 15 wird weiter die Wirkung der Hysterese, zum Beispiel mit einem Hysteresefaktor k mit

$$k = 5/8 = 0.625 = 62.5\,\%$$

gezeigt. Ein Wechsel des ausgewählten Nulldurchgangs des Induktivitätstroms $I_L$ als Wiedereinschaltzeitpunkt des Schalters 5 wird von der Steuerschaltung 2 vorgenommen, wenn der zeitliche Abstand zwischen dem berechneten theoretischen Wiedereinschaltzeitpunkt und dem aktuell ausgewählten Wiedereinschaltzeitpunkt betragsmäßig größer als das Produkt aus Hysteresefaktor k und der Periodendauer der Resonanzschwingung des getakteten Konverters 1 ist.

Die Periodendauer der Resonanzschwingung des getakteten Konverters 1 entspricht dem zeitlichen Abstand zweier gleichphasiger Stromwerte des Induktivitätsstroms $I_L$ während der Resonanzschwingung während der der Totzeit $t_{dead}$.

In Fig. 15 entspricht der zeitliche Abstand zweier gleichphasiger Stromwerte des Induktivitätsstroms $I_L$ während der Resonanzschwingung einer Höhe einer Stufe der Kurven 17, 19 der eingestellten Totzeit $t_{dead}$ in Richtung der Ordinate der Fig. 15.

Die Höhe 20 ist in Fig. 15 in Zählerwerten, entsprechend einer normierten Zeit, dargestellt.

Ein Wechsel des ausgewählten Wiedereinschaltzeitpunkts erfolgt in dem in Fig. 15 gewählten Ausführungsbeispiel mit einem Hysteresefaktor k in Höhe von etwa 0.625. Dies ist daran zu erkennen, dass der Wechsel nicht bei der Hälfte, also 0,5 oder 50 % der Stufenhöhe 20 erfolgt, was der Auswahl des einem berechneten Einschaltzeitpunkt zeitlich nächstliegendem Nulldurchgangs mit positivem Gradienten des Induktivitätsstroms $I_L$ entsprechen würde, sondern nach etwa 0.625 oder 62.5 % entsprechend der ersten Strecke 21 bei der Kurve 16 für abnehmende Totzeit $t_{dead}$ oder der Strecke 22 der Kurve 18 für zunehmende Totzeit $t_{dead}$.

Es wird auch deutlich, dass für einen einzustellenden Wert des mittleren Laststroms $I_{avg\_nom}$ möglicherweise unterschiedliche Arbeitspunkte des getakteten Konverters 1 bestehen.

Fig. 16 stellt berechnete Werte für die Totzeit $t_{dead\_dom}$ und eingestellte Werte für die Totzeit $t_{dead}$ mit einer Hysterese für zeitlich ansteigende und für zeitlich abfallenden Werte des vorgegebenen Laststroms in einem Ausschnitt dar.

Aus Fig.16 wird deutlich, dass für einen vorgegebenen Wert des mittleren Laststroms $I_{avg\_nom}$ und einen entsprechend eingestellten Wert des mittleren Laststroms $I_{avg}$ zwei unterschiedliche Arbeitspunkte aufgrund der Hysterese des getakteten Konverters 1 existieren.

Aufgrund der Hysterese stellen sich die unterschiedlichen Arbeitspunkte ein, je nachdem, ob die Steuerschaltung 2 von einer niedrigeren oder einer höheren Totzeit $t_{dead\_nom}$ bzw. $t_{dead}$ aus zu einem aktuellen Zieldimmwert, und damit zu einem aktuellen nominalen mittleren Laststrom $I_{avg\_nom}$, zu einer entsprechend berechneten aktuellen Totzeit $t_{dead\_nom}$ bzw. $t_{dead}$ als Wiedereinschaltzeitpunkt für den Schalter 5 und dazu berechneten Spitzenstrom $I_{peak\_nom}$ als Ausschaltschwelle für den Schalter 5 gelangt.

In einem Beispiel ist ein vorgegebener mittlerer Laststrom $I_{avg}$ mit einer mittleren Stromstärke von 100 mA durch den getakteten Konverter 1 bereitzustellen.

Dies kann zum einen in einem ersten Arbeitspunkt erfolgen, der durch eine Totzeit $t_{dead}$ mit einer Dauer von vier Perioden der Resonanzschwingung gekennzeichnet ist. Es erfolgt also eine Wiedereinschalten des Schalters 5 des getakteten Konverters 1 bei einem Nulldurchgang des Induktivitätsstroms $I_{buck}$ mit positivem Gradienten des Verlaufs des Spulenstrom $I_L$ in der vierten Periode der Resonanzschwingung nach Ausschalten des Schalters 5. Das Ausschalten des Schalters 5 erfolgt im ersten Arbeitspunkt bei Erreichen eines Spitzenstroms $I_{peak}$ mit einer Stromstärke von 300 mA.

Ein zweiter Arbeitspunkt ist durch eine Totzeit $t_{dead}$ mit einer Dauer von fünf Perioden der Resonanzschwingung gekennzeichnet. Es erfolgt also eine Wiedereinschalten des Schalters 5 des getakteten Konverters 1 bei einem Nulldurchgang des Induktivitätsstroms $I_L$ mit positivem Gradienten des Verlaufs des Induktivitätsstroms $I_L$ in der fünften Periode der Resonanzschwingung nach Ausschalten des Schalters 5. Das Ausschalten des Schalters 5 erfolgt in dem zweiten Arbeitspunkt bei Erreichen eines Spitzenstroms $I_{peak}$ mit einer Stromstärke von 330 mA.

In dem ersten Arbeitspunkt und in dem zweiten Arbeitspunkt wird in dem gewählten Zahlenbeispiel eine mittlere Stromstärke des Laststroms $I_{avg}$ entsprechend $I_{LED}$ in Höhe von 100 mA erreicht. Fig. 16 zeigt einen Wert 26 der Totzeit $t_{dead}$ der über einen ansteigenden Dimmverlauf des mittleren Laststroms $I_{avg}$ und einen entsprechend fallenden Verlauf 21 der Totzeit $t_{dead\_nom}$ erreicht wird. Daraus ergibt sich ein stufenförmiger Verlauf 22 der eingestellten Totzeit $t_{dead}$.

Für die Totzeit $t_{dead}$ für den ersten Arbeitspunkt ergibt sich daraus eine erste Totzeit $t_{dead1}$ 28 in Fig. 16, da die Hysterese für den dargestellten Verlauf keine berechnete Totzeit $t_{dead\_nom}$ 26 ergibt, die von der bereits eingestellten Totzeit $t_{dead1}$ um mehr als 62.5 % abweicht.

Die Steuerschaltung 2 stellt dabei in Fig. 16 die Totzeit mit einer Hysterese ein. Die Hysterese kann zum Beispiel bei 62.5 % der Periodendauer der Resonanzschwingung des getakteten Konverters 1 liegen.

Der entsprechende Wert 26 der Totzeit $t_{dead}$ kann alternativ über einen fallenden Dimmverlauf des mittleren Laststroms $I_{avg}$ und einen entsprechend ansteigenden Verlauf 23 der Totzeit $t_{dead\_nom}$ erreicht werden. Damit ergibt sich eine stufenförmig ansteigender Verlauf 24 der Totzeit $t_{dead}$.

Für die Totzeit $t_{dead}$ für den zweiten Arbeitspunkt ergibt sich daraus eine zweite Totzeit $t_{dead2}$ 29 in Fig. 16, da die Hysterese für den dargestellten Verlauf eben keine berechnete Totzeit $t_{dead\_nom}$ 26 ergibt, die von der bereits eingestellten Totzeit $t_{dead2}$ um mehr als 62.5 % abweicht.

Aus Fig. 16 wird damit deutlich, dass für eine berechnete Totzeit $t_{dead\ nom}$ 26 für die Ausführung mit Hysterese zwei Arbeitspunkte existieren, die durch unterschiedliche erste Totzeit $t_{dead1}$ 28 und zweite Totzeit $t_{dead2}$ 29 gekennzeichnet sind.

Die Steuerschaltung 2 kann die Ausschaltschwelle für den Spitzenstrom $I_{peak}$ entsprechend zu den unterschiedlichen Werten für die Totzeit $t_{dead1}$ 28, $t_{dead2}$ 29 zu $I_{peak1}$ bzw. $I_{peak2}$ ermitteln, um denselben Sollwert $I_{avg\ nom}$ mit dem aktuellen Istwert des Laststroms $I_{avg}$ zu erreichen.

Die diskutierte Ausführung der Hysterese für die Ermittlung eines Wiedereinschaltzeitpunkts des Schalters 5 erfolgt mit wertmäßig gleichem Hysteresefaktor k für einen ansteigenden und einen fallenden Dimmverlauf des Laststroms $I_{avg}$.

Alternativ können Hysteresefaktoren mit jeweils unterschiedlichen Werten für ansteigenden und einen fallenden Dimmverlauf des Laststroms $I_{avg}$ gewählt werden.


**Patentansprüche**

1. Betriebsgerät zum dimmbaren Betrieb von Leuchtmitteln (1), insbesondere einer oder mehrerer LED(s),

   - aufweisend eine getaktete Konverterschaltung (1) umfassend ein Energiespeicherelement (4), eine Steuerschaltung (2) und wenigstens einen Schalter (5), der ausgehend von der Steuerschaltung (2) getaktet ist,
   - wobei die Steuerschaltung (2) dazu ausgelegt ist, durch Ansteuerung des Schalters (5) die Konverterschaltung (1) wahlweise wenigstens in einem kritischen Modus oder in einem Modus mit einem lückenden Betrieb zu betreiben,
   - wobei die Steuerschaltung (2) ausgelegt ist, im lückenden Betrieb einen Wiedereinschaltzeitpunkt des Schalters (5) in diskreten Inkrementen in einen der zeitlichen Bereiche nach dem ersten Nulldurchgang zu setzen, in denen ein Strom durch das Energiespeicherelement (4) einen steigenden Nulldurchgang vollführt, und bei einer inkrementellen Veränderung des Wiedereinschaltzeitpunkts eine die Leuchtmittel-Leistung beeinflussende Rückführgröße durch direkte oder indirekte Veränderung einer Einschaltzeitdauer des Schalters (5) zu regeln, und
   die Steuerschaltung (2) dazu ausgelegt ist, in dem lückenden Betrieb eine Veränderung des Wiedereinschaltzeitpunkts zu einem von einem aktuellen Wiedereinschaltzeitpunkt des Schalters (5) verschiedenen berechneten neuen Wiedereinschaltzeitpunkt nur dann auszuführen, wenn der neue Wiedereinschaltzeitpunkt des Schalters (5) von dem aktuellen Wiedereinschaltzeitpunkt um eine Zeitdauer größer als ein vorbestimmter Wert abweicht, und
   **dadurch gekennzeichnet, dass**
   der vorbestimmte Wert eine Zeitdauer länger als 55% und bevorzugt eine Zeitdauer länger 62.5 % der Periodendauer einer Resonanzschwingung des Stroms durch das Energiespeicherelement (4) während einer Totzeit der getakteten Konverterschaltung (1) ist.

2. Betriebsgerät nach Anspruch 1,
   bei dem die Steuerschaltung (2) dazu ausgelegt ist,

   - bei einer inkrementellen Verlängerung des Wiedereinschaltzeitpunkts inkrementell die Einschaltzeitdauer zu verlängern und eine Regelung mit der Steuergröße "Einschaltzeitdauer" durchzuführen, und
   - bei einer inkrementellen Verringerung des Wiedereinschaltzeitpunkts inkrementell die Einschaltzeitdauer zu verkürzen und dann eine Regelung mit der Steuergröße "Einschaltzeitdauer" durchzuführen.

3. Betriebsgerät nach einem der vorhergehenden Ansprüche,

   bei dem die Steuerschaltung (2) dazu ausgelegt ist,
   eine inkrementelle Veränderung des Wiedereinschaltzeitpunkts durchzuführen, wenn die Regelung mit der Steuergröße "Einschaltzeitdauer" vorgegebene Mindest- oder Maximalwerte der Einschaltdauer oder einer diese beeinflussenden Größe zur Folge hat.

4. Betriebsgerät nach einem der vorhergehenden Ansprüche,

bei dem die Steuerschaltung (2) dazu ausgelegt ist,
die Veränderung der Einschaltzeitdauer des Schalters (5) indirekt durch Vorgabe einer Abschaltschwelle für den Strom durch den Schalter (5) oder direkt durch Vorgabe der Einschaltzeitdauer vorzugeben.

5. Betriebsgerät nach einem der vorhergehenden Ansprüche,
bei dem die Steuerschaltung (2) dazu ausgelegt ist, bei einem Übergang vom kritischen Modus in den Modus mit lückendem Betrieb den Wert für die Einschaltzeitdauer des Schalters (5) sprunghaft zu verlängern.

6. Betriebsgerät nach einem der vorhergehenden Ansprüche, umfassend eine Schaltung zur Erfassung des Nulldurchgangs des Stroms durch das Energiespeicherelement (4) der Konverterschaltung (1), insbesondere eines Buck-Konverters,
wobei die Schaltung eine mit einem Potential an einem Verbindungspunkt einer Diode (7) des Buck-Konverters und eines Schalters (5) des Buck-Konverters verbundene Diodenschaltung aufweist, die ausgelegt ist, ein vorzugsweise digitales Erfassungssignal zu erzeugen, dessen vorzugsweise logischer Pegel sich bei einem Nulldurchgang des Stroms durch die Induktivität (4) ändert.

7. Betriebsgerät nach Anspruch 6, aufweisend einen software-mäßig oder hardwaremäßig ausgebildeten Block, der ausgelegt ist, zu verhindern, dass sich der Pegel des Erfassungssignals nach einem ersten Nulldurchgang bei weiteren Nulldurchgängen verändert.

8. Betriebsgerät nach einem der Ansprüche 6 oder 7, wobei die Schaltung zur Erfassung des Nulldurchgangs des Stroms durch das Energiespeicherelement (4) der Konverterschaltung (1) ausgelegt ist, der Steuerschaltung (2) das Erfassungssignal zuzuführen, und
wobei die Steuerschaltung (2) vorzugsweise als Mikrokontroller ausgebildet ist, und der Mikrokontroller ausgelegt ist, Starten eines Zählers in dem Mikrokontroller durch eine definierte Pegeländerung des Erfassungssignals auszulösen.

9. Betriebsgerät nach einem der Ansprüche 6 bis 8, aufweisend
eine mit der Induktivität (4) des Buck-Konverters magnetisch gekoppelte Hilfswicklung (L1-b), die ausgelegt ist, ein Signal zu erzeugen, das einen ein Detektionssignal erzeugenden Transistor (Q30) schaltet, wenn der Strom durch die Induktivität (4) seinen unteren Umkehrpunkt erreicht.

10. Betriebsgerät aufweisend eine Schaltung nach Anspruch 9, ferner aufweisend eine Schaltung zur
Erfassung des unteren Umkehrpunkts des Stroms durch die Induktivität (L4), welche dazu ausgelegt ist, der Steuerschaltung (2), vorzugsweise einem Mikrokontroller, das Detektionssignal zuzuführen.

11. Betriebsgerät nach Anspruch 10,
wobei die Steuerschaltung (2) ein Mikrokontroller ist und der Mikrokontroller ausgeführt ist, auf eine definierte Pegeländerung des Detektionssignals Speichern eines aktuellen Zählerwerts eines Zählers in dem Mikrokontroller auszulösen.

12. Betriebsgerät für Leuchtmittel (6) nach einem der vorhergehenden Ansprüche, insbesondere aufweisend einen Buck-Konverter als primärseitige Konverterschaltung (1),

wobei die Steuerschaltung (2) ausgelegt ist, den Schalter (5) nach Ablauf einer vorgegebenen Zeitdauer $t_{on}$ oder bei Erreichen einer Abschaltschwelle des ansteigenden Schalterstroms wieder nichtleitend zu schalten,
wobei die Steuerschaltung (2) ausgelegt ist, ein Rückführsignal zu erhalten, das die Spannung über die vom Betriebsgerät versorgten Leuchtmittel (6) wiedergibt,
wobei die Steuerschaltung (2) ausgelegt ist, die Zeitdauer $t_{on}$ oder die Abschaltschwelle abhängig von dem Rückführsignal einzustellen.

13. Betriebsgerät für Leuchtmittel nach Anspruch 12, wobei die Steuerschaltung (2) ausgelegt ist, die Abschaltschwelle bei niedrigerer Spannung über die Leuchtmittel (6) niedriger einzustellen als bei höherer Spannung über die Leuchtmittel (6).

**Claims**

1. Operating device for dimmably operating lamps (1), in particular one or a plurality of LED(s),

   - which device has a clocked converter circuit (1) which comprises an energy storage element (4), a control circuit (2) and at least one switch (5) which is clocked starting from the control circuit (2),
   - the control circuit (2) being designed to selectively operate the converter circuit (1), by means of controlling the switch (5), at least in a critical mode or in a discontinuous mode,
   - the control circuit (2) being designed to set, in discontinuous mode, a re-switch-on time of the switch (5) in discrete increments in one of the time ranges following the first zero crossing, in which time ranges a current through the energy storage element (4) makes a rising zero crossing, and

   to adjust a feedback variable which influences the lamp output, by directly or indirectly changing a switch-on period of the switch (5) in the event of an incremental change in the re-switch-on time, and
   the control circuit (2) being designed to only change, in discontinuous mode, the re-switch-on time to a new calculated re-switch-on time, which differs from a current re-switch-on time of the switch (5), if the new re-switch-on time of the switch (5) deviates from the current re-switch-on time by a period of time greater than a predefined value, and
   **characterized in that**
   the predefined value is a time period longer than 55% and preferably a time period longer than 62.5% of the period of a resonance oscillation of the current through the energy storage element (4) during idle time of the clocked converter circuit (1).

2. Operating device according to claim 1,
   in which the control circuit (2) is designed

   - to incrementally extend the switch-on period and to make an adjustment using the control variable 'switch-on period' in the event of an incremental extension of the re-switch-on time, and
   - to incrementally shorten the switch-on period and then to make an adjustment using the control variable 'switch-on period' in the event of an incremental reduction of the re-switch-on time.

3. Operating device according to any of the preceding claims,

   in which the control circuit (2) is designed
   to incrementally change the re-switch-on time if the adjustment using the control variable 'switch-on period' results in predefined minimum or maximum values of the switch-on period or of a variable which influences said period.

4. Operating device according to any of the preceding claims,

   in which the control circuit (2) is designed
   to specify the change in the switch-on period of the switch (5) either indirectly, by specifying a switch-off threshold for the current through the switch (5), or directly, by specifying the switch-on period.

5. Operating device according to any of the preceding claims,
   in which the control circuit (2) is designed to discretely extend the value for the switch-on period of the switch (5) during a transition from critical mode to discontinuous mode.

6. Operating device according to any of the preceding claims, comprising a circuit for detecting the zero crossing of the current through the energy storage element (4) of the converter circuit (1), in particular of a buck converter, wherein the circuit has a diode circuit connected to a potential at a connection point of a diode (7) of the buck converter and a switch (5) of the buck converter, which diode circuit is designed to generate a preferably digital detection signal whose preferably logic level changes upon a zero crossing of the current through the inductor (4).

7. Operating device according to claim 6, which has a software or hardware block which is designed to prevent the level of the detection signal from changing during further zero crossings after a first zero crossing.

8. Operating device according to either claim 6 or claim 7, wherein the circuit for detecting the zero crossing of the current through the energy storage element (4) of the converter circuit (1) is designed to supply the detection signal to the control circuit (2), and

wherein the control circuit (2) is preferably designed as a microcontroller and the microcontroller is designed to trigger, by means of a defined level change of the detection signal, a counter in the microcontroller to start.

9. Operating device according to any of claims 6 to 8, which has
an auxiliary winding (L1-b) which is magnetically coupled to the inductor (4) of the buck converter, which auxiliary winding is designed to generate a signal which switches a transistor (Q30) generating a detection signal when the current through the inductor (4) reaches its lower reversal point.

10. Operating device having a circuit according to claim 9, further having a circuit for detecting the lower reversal point of the current through the inductor (L4), which circuit is designed to supply the detection signal to the control circuit (2), preferably to a microcontroller.

11. Operating device according to claim 10,
wherein the control circuit (2) is a microcontroller and the microcontroller is configured to trigger storage of a current counter value of a counter in the microcontroller in response to a defined level change of the detection signal.

12. Operating device for lamps (6) according to any of the preceding claims, in particular having a buck converter as a primary-side converter circuit (1),

wherein the control circuit (2) is designed to switch the switch (5) back to nonconductive mode after a predefined time period $t_{on}$, or when a switch-off threshold of the increasing switch current is reached,
wherein the control circuit (2) is designed to receive a feedback signal which represents the voltage across the lamps (6) supplied by the operating device,
wherein the control circuit (2) is designed to set the time period $t_{on}$ or the switch-off threshold on the basis of the feedback signal.

13. Operating device for lamps according to claim 12, wherein the control circuit (2) is designed, in the case of a lower voltage across the lamps (6), to set the switch-off threshold lower than in the case of a higher voltage across the lamps (6).

## Revendications

1. Appareil de commande permettant la commande modulable de moyens d'éclairage (1), en particulier d'une ou plusieurs DEL,

- présentant un circuit convertisseur (1) cadencé comprenant un élément de stockage d'énergie (4), un circuit de contrôle (2) et au moins un commutateur (5) cadencé à partir du circuit de contrôle (2),
- dans lequel le circuit de contrôle (2) est conçu pour commander sélectivement le circuit convertisseur (1) au moins dans un mode critique ou dans un mode de fonctionnement par intervalles par contrôle du commutateur (5),
- dans lequel le circuit de contrôle (2) est conçu pour régler, en fonctionnement par intervalles, un instant de remise en marche du commutateur (5) par incréments discrets dans l'une des plages temporelles après le premier passage par zéro, dans lesquelles un courant traversant l'élément de stockage d'énergie (4) effectue un passage par zéro croissant, et

lors d'une modification incrémentielle de l'instant de remise en marche, pour réguler une grandeur de rétroaction influençant la puissance du moyen d'éclairage par une modification directe ou indirecte d'une durée de mise en marche du commutateur (5), et
le circuit de contrôle (2) est conçu pour exécuter, dans le fonctionnement par intervalles, une modification de l'instant de remise en marche à un nouvel instant de remise en marche calculé différent d'un instant de remise en marche actuel du commutateur (5) uniquement lorsque le nouvel instant de remise en marche du commutateur (5) s'écarte de l'instant de remise en marche actuel d'une durée supérieure à une valeur prédéterminée, et
**caractérisé en ce que**
la valeur prédéterminée est une durée supérieure à 55 %, et de préférence une durée supérieure à 62,5 %, de la période d'une oscillation de résonance du courant traversant l'élément de stockage d'énergie (4) pendant un temps mort du circuit convertisseur (1) cadencé.

2. Appareil de commande selon la revendication 1,
dans lequel le circuit de contrôle (2) est conçu,

- en cas de prolongation incrémentielle de l'instant de remise en marche, pour prolonger de manière incrémentielle la durée de mise en marche et pour effectuer une régulation avec la grandeur de contrôle « durée de mise en marche », et
- en cas de réduction incrémentielle de l'instant de remise en marche, pour réduire de manière incrémentielle la durée de mise en marche et pour effectuer ensuite une régulation avec la grandeur de contrôle « durée de mise en marche ».

3. Appareil de commande selon l'une des revendications précédentes,

dans lequel le circuit de contrôle (2) est conçu,
pour effectuer une modification incrémentielle de l'instant de remise en marche lorsque la régulation avec la grandeur de contrôle « durée de mise en marche » entraîne des valeurs minimales ou maximales prédéfinies de la durée de mise en marche ou d'une grandeur qui l'influence.

4. Appareil de commande selon l'une des revendications précédentes,

dans lequel le circuit de contrôle (2) est conçu,
pour prédéfinir la modification de la durée de mise en marche du commutateur (5) indirectement par prédéfinition d'un seuil de coupure pour le courant traversant le commutateur (5) ou directement par prédéfinition de la durée de mise en marche.

5. Appareil de commande selon l'une des revendications précédentes,
dans lequel le circuit de contrôle (2) est conçu pour prolonger brusquement la valeur pour la durée de mise en marche du commutateur (5) lors d'une transition du mode critique au mode de fonctionnement par intervalles.

6. Appareil de commande selon l'une des revendications précédentes, comprenant un circuit pour la détection du passage par zéro du courant traversant l'élément de stockage d'énergie (4) du circuit convertisseur (1), en particulier d'un convertisseur abaisseur,
dans lequel le circuit présente un circuit à diodes connecté à un potentiel au niveau d'un point de connexion d'une diode (7) du convertisseur abaisseur et d'un commutateur (5) du convertisseur abaisseur, lequel circuit à diodes est conçu pour générer un signal de détection de préférence numérique dont le niveau de préférence logique varie lors du passage par zéro du courant traversant l'inductance (4).

7. Appareil de commande selon la revendication 6, présentant un bloc logiciel ou matériel qui est conçu pour empêcher le niveau du signal de détection de changer après un premier passage par zéro lors des passages par zéro suivants.

8. Appareil de commande selon l'une des revendications 6 ou 7, dans lequel le circuit pour la détection du passage par zéro du courant traversant l'élément de stockage d'énergie (4) du circuit convertisseur (1) est conçu pour fournir le signal de détection au circuit de contrôle (2), et
dans lequel le circuit de contrôle (2) est de préférence réalisé comme un microcontrôleur, et le microcontrôleur est conçu pour déclencher le démarrage d'un compteur dans le microcontrôleur par un changement de niveau défini du signal de détection.

9. Appareil de commande selon l'une des revendications 6 à 8, présentant
un enroulement auxiliaire (L1-b) couplé magnétiquement à l'inductance (4) du convertisseur abaisseur et conçu pour générer un signal qui commute un transistor (Q30) générant un signal de captage lorsque le courant traversant l'inductance (4) atteint son point d'inversion inférieur.

10. Appareil de commande présentant un circuit selon la revendication 9, présentant en outre un circuit pour la détection du point d'inversion inférieur du courant traversant l'inductance (L4), qui est conçu pour fournir le signal de captage au circuit de contrôle (2), de préférence à un microcontrôleur.

**11.** Appareil de commande selon la revendication 10,
dans lequel le circuit de contrôle (2) est un microcontrôleur et le microcontrôleur est réalisé pour déclencher, en réponse à un changement de niveau défini du signal de captage, le stockage d'une valeur de compteur actuelle d'un compteur dans le microcontrôleur.

**12.** Appareil de commande pour moyens d'éclairage (6) selon l'une des revendications précédentes, présentant en particulier un convertisseur abaisseur en guise de circuit convertisseur (1) côté primaire,

dans lequel le circuit de contrôle (2) est conçu pour rendre le commutateur (5) à nouveau non conducteur après l'écoulement d'une durée prédéfinie $t_{on}$ ou lorsqu'un seuil de coupure du courant de commutateur croissant est atteint,
dans lequel le circuit de contrôle (2) est conçu pour obtenir un signal de rétroaction qui reproduit la tension aux bornes des moyens d'éclairage (6) alimentés par l'appareil de commande,
dans lequel le circuit de contrôle (2) est conçu pour régler la durée $t_{on}$ ou le seuil de coupure en fonction du signal de rétroaction.

**13.** Appareil de commande pour moyens d'éclairage selon la revendication 12, dans lequel le circuit de contrôle (2) est conçu pour régler le seuil de coupure plus bas lorsque la tension aux bornes des moyens d'éclairage (6) est plus faible que lorsque la tension aux bornes des moyens d'éclairage (6) est plus élevée.

Fig. 1

DCM Tiefsetzsteller

$$I_{AVG} = I_{peak}/2^* (t_{on} + t_{off})/(t_{on} + t_{off} + t_{dead})$$

Fig. 2

Fig. 3

Fig. 4

Fig. 5

Fig. 6

Fig. 7

Fig. 8

ΔIpk
e.g. „0.1A"

Ipk_comp
e.g. „0.9A"          e.g. „1A"          e.g. „0.8A"          DAC

Ipk_overshoot
e.g. „ 0.2A"

R1

R2          C1          turn
off
switch

V$_{R Shunt}$

## Fig. 9

Ipk_overshoot

0,2A

0,05A

60V          300V          V$_{LED}$

## Fig. 10

Fig. 11

Fig. 12

Fig. 13

Fig. 14

Fig. 15

Fig. 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014220099 A1
- US 2015244272 A1
- DE 102015210710 A1
- US 2015303796 A1
- US 8552893 B1
- DE 1020152032049 A1